(19) Europäisches Patentamt / European Patent Office / Office européen des brevets

(11) **EP 1 961 466 A1**

(12) **EUROPEAN PATENT APPLICATION**

(43) Date of publication:
27.08.2008 Bulletin 2008/35

(51) Int Cl.:
*A63F 13/02* (2006.01)     *A63F 13/04* (2006.01)
*A63F 13/06* (2006.01)

(21) Application number: 08002545.5

(22) Date of filing: 12.02.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 23.02.2007 JP 2007044100

(71) Applicant: Nintendo Co., Ltd.
Minami-ku,
Kyoto 601-8501 (JP)

(72) Inventor: Ueno, Takayuki
Tokyo 140-0013 (JP)

(74) Representative: Altenburg, Udo
Patent- und Rechtsanwälte
Bardehle . Pagenberg . Dost . Altenburg .
Geissler
Galileiplatz 1
81679 München (DE)

(54) **Computer-readable storage medium having stored therein information processing program and information processing apparatus**

(57) A controller includes imaging means for capturing predetermined imaging targets and acceleration detecting means for detecting an acceleration applied to an input device. A game apparatus repeatedly calculates a target position which is related to images, included in a captured image captured by the imaging means, of the imaging targets and which is provided in the captured image, and then senses a predetermined motion (a motion in an upward direction) of the input device based on the target position calculated within a predetermined time period. Further, the game apparatus senses the predetermined motion of the input device based on the acceleration detected by the acceleration detecting means. Furthermore, the game apparatus executes a predetermined process (a process of causing a player character to perform a jump) when the predetermined motion has been sensed in at least either one of a first motion determining step and a second motion determining step.

Fig. 7

EP 1 961 466 A1

**Description**

CROSS REFERENCE TO RELATED APPLICATION

The disclosure of Japanese Patent Application No. 2007-044100, filed February 23, 2007, is incorporated herein by reference.

BACKGROUND OF THE INVENTION

Field of the Invention

The present invention relates to an information processing program and an information processing apparatus, and particularly to aninformation processing apparatus for performing a process determined in accordance with the motion and the tilt of an input device including imaging means and a motion sensor and to an information processing program executed by the information processing apparatus.

Description of the Background Art

Conventionally, the motion of an input device is detected, whereby an input instruction given in accordance with the motion of the input device is determined. For example, Patent Document 1 (Japanese Laid-Open Patent Publication No. 2003 - 333361) discloses a device in which a user can give an input instruction by moving an input device including an acceleration sensor. In this device, the motion of the input device is determined by the acceleration sensor and a process determined in accordance with the motion of the input device is performed.

Although it is possible to sense the general motion of the input device using a motion sensor such as the acceleration sensor, it is difficult to accurately sense the motion of the input device. The reason is that even when the input device moves in a relatively simple manner (as in a case where the input device is swung in a certain direction), the change of an acceleration to be detected as a result of the movement is complicated. Consequently, it is difficult to analyze the motion of the input device based on the acceleration.

SUMMARY OF THE INVENTION

Therefore, an object of the present invention is to provide an information processing program and an information processing apparatus which are capable of accurately sensing the motion of an input device.

The present invention has the following features to attain the above-mentioned object. Note that in this section, reference numerals, supplemental descriptions, and the like in parentheses merely indicate correspondence with the below-described embodiment so as to assist understanding of the present invention, and do not limit the present invention in any way.

A first aspect is a computer-readable storage medium having stored therein an information processing program (a game program 60) executed by a computer (a CPU 10, etc.) of an information processing apparatus (a game apparatus 3) for performing a process determined in accordance with a motion of an input device (a controller 5). The input device includes imaging means (an image pickup element 40) for capturing predetermined imaging targets (a marker section 6) and motion detecting means (an acceleration sensor 37) for detecting the motion of the input device. The information processing program causes the computer to execute a first determining step (S38), a second determining step (S39, S41), and a first process executing step (S42). In the first determining step, the computer determines a predetermined motion (a motion in an upward direction) of the input device based on a motion which is related to images, included in a captured image captured by the imaging means, of the predetermined imaging targets and which is obtained in the captured image. In the second determining step, the computer determines the predetermined motion (the motion in the upward direction) of the input device based on the detection result of the motion detecting means. In the first process executing step, the computer executes a predetermined process (a process of causing a player character to perform a jump) in accordance with the determination result of the first determining step and the determination result of the second determining step.

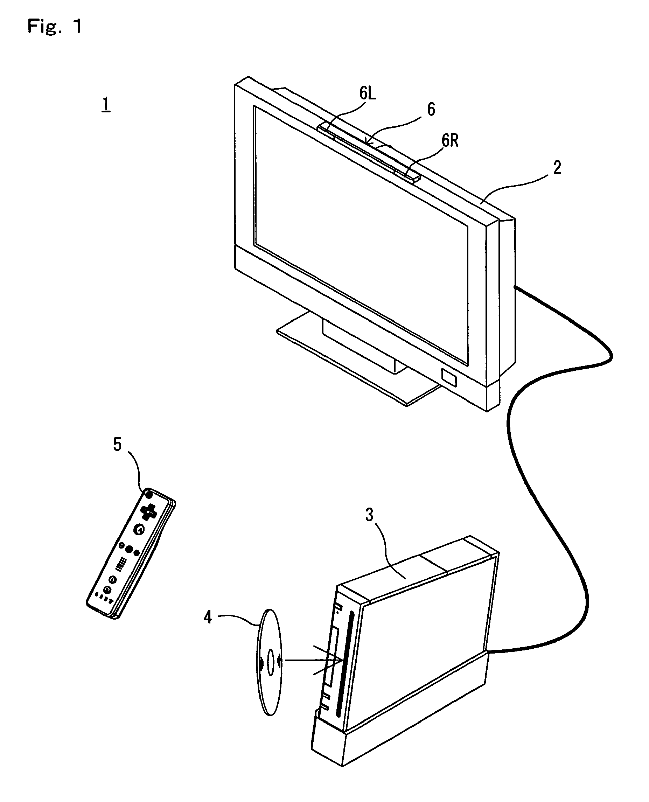

Note that in the first aspect and the below-described tenth aspect, the input device and the information processing apparatus may be separate or combined. That is, in the first and tenth aspects, the input device held by the user may be communicable to the information processing apparatus in a wireless manner or in a wired manner (FIG. 1), or the input device and the information processing apparatus for executing the information processing program may be provided in a casing (a housing) held by the user.

In the first aspect, the "motion which is related to images, included in a captured image captured by the imaging means, of the predetermined imaging targets and which is obtained in the captured image" is represented by, for example, the motion (movement) of marker coordinates, that of the midpoint of the marker coordinates, and that of a pointing position, which are described in the embodiment below. That is, the marker coordinates, the midpoint of the marker coordinates, and the pointing position may be repeatedly obtained, whereby it is possible to determine the motion related to the images of the imaging targets, based on the obtained history. Further, the position of a feature point of the images of the imaging targets may be calculated, whereby the motion related to the images of the imaging targets may be calculated as the motion of the position of the feature point.

In the first aspect, the "motion detecting means" is provided in the input device in an integrated manner, is means different from the imaging means, and is a sensor for outputting data in accordance with the motion of the input device. For example, the motion detecting means may be means for outputting a value determined in accordance with a linear motion or a value determined in accordance with a rotation. The means for outputting a value determined in accordance with a linear motion may include an acceleration sensor, while the means for outputting a value determined in accordance with a rotation may include a gyro-sensor. Further, the acceleration sensor and the gyro-sensor may be sensors capable of detecting not only the accelerations/rotations in multiple axes but also the acceleration/rotation in one axis, respectively. Furthermore, these sensors may be combined so as to perform detection more accurately. Additionally, in the determining steps of the first aspect, the linear motion or the rotation of the input device is determined. Note that the below-described process may be performed for data outputted from the acceleration sensor, whereby it is also possible to determine the rotation using the acceleration sensor. The first determining step and the second determining step determine the linear motion and/or the rotation of the input device in accordance with the type of the sensor to be used.

Described is an example of a case where the acceleration sensor is used to determine the rotation. As a simple example, the acceleration sensor is a one-axial acceleration sensor and detects the acceleration generated in a predetermined direction of the input device. Then, the change of a component of a gravitational acceleration may be analyzed using the acceleration detected by the acceleration sensor, whereby it is possible to determine whether or not the input device has rotated around an axis orthogonal to the direction of gravity.

Here, in the case of using the acceleration sensor, when the input device rotates around the axis of a direction in which the tilt of a detection axis of the acceleration sensor does not change (as in a case where the detection axis of the acceleration sensor is the same as a rotation axis of the rotation of the input device), the component of the gravitational acceleration generated in the direction of the detection axis does not change. Therefore, it is difficult to determine the rotation of the input device. On the other hand, when the detection axis of the acceleration sensor is different from the rotation axis of the rotation of the input device, it is possible to determine the rotation of the input device.

Note that in many cases, it is sufficient to only allow a proper process to be performed on the assumption that an operation is performed following a proper operation method established by a developer. In these cases, there is no significant problem even if the proper process is not performed when an operation other than the above operation is performed. Therefore, so long as a rotation operation method (more specifically, a method of determining an axis around which the rotation operation is to be performed) of the input device is indicated as the proper operation method in instructions, on a directions screen, and the like, the user will perform, in accordance with the indicated method, an operation of rotating the input device. When the user performs an operation departing from the indicated method, it is impossible to accurately determine the rotation of the input device. However, when the performed operation merely departs from the indicated method within an acceptable range, it is possible to obtain an approximately proper process result.

Note that in the case of using the acceleration sensor, it is possible to calculate the tilt (or the rotation) of the input device based on an output value from the acceleration sensor by, for example, the following method. That is, the acceleration sensor calculates not only the component of the gravitational acceleration acting on the input device but also a component of the acceleration acting in accordance with the motion of the input device. However, it may be impossible to accurately calculate the tilt of the input device without changing the values of the accelerations including both of the components. Therefore, by a process known to those skilled in the art, the component of the gravitational acceleration may be extracted or selected and then the tilt of the input device may be calculated based on the component of the gravitational acceleration. As a simple example, the process may be performed such that when the magnitude of the acceleration detected by the acceleration sensor represents a value greater (or a sufficiently great value) than the magnitude of the gravitational acceleration, the value of the detected acceleration is rejected (i.e., is not used to calculate the tilt of the input device), based on the determination that the value of the detected acceleration does not represent the gravitational acceleration. Alternatively, the process may be performed such that only when the value of the acceleration detected by the acceleration sensor changes by a small amount, the value of the detected acceleration is used to analyze an orientation (i.e., is used to calculate the tilt of the input device), based on the determination that the value of the detected acceleration represents the gravitational acceleration. Furthermore, from the value of the acceleration detected by the acceleration sensor, a high-frequency component of the detected acceleration may be removed. Additionally, in the case of information processing for which it is not required to violently move the input device, it is not required to remove the component of the acceleration acting in accordance with the motion of the input device. The reason is that even when the acceleration generated in accordance with the motion of the input device is detected, it is still possible to obtain an approximately proper result so long as the user does not violently move the input device and it is sufficiently useful.

Note that in the case of using the acceleration sensor capable of detecting the accelerations in multiple axes and using the values of the accelerations separately generated in multi-axial directions, it is possible to make a more detailed determination by calculating the magnitude of the rotation of the input device. For example, it is possible to calculate the rotation angle of the input device by performing a predetermined calculation process using the values of the accelerations in two-axial directions which are detected by the acceleration sensor. Typically, it is possible to use, to calculate the rotation angle of the input device, a calculation process using trigonometric functions for which the values of the accelerations in the two-axial directions may be substituted for arctangent functions. Alternatively, it is possible to determine the magnitude of the rotation based also on a vector having the components of the accelerations in the two-axial directions which are detected by the acceleration sensor.

Next, described is a case where the gyro-sensor is used as the motion detecting means of the first aspect to determine the rotation of the input device. In this case, when the input device is rotated around a predetermined axis, the gyro-sensor directly detects the rotation and outputs angular velocity data. Consequently, it is possible to directly determine the rotation of the input device based on the outputted angular velocity data.

Further, in the first determining step of the first aspect, the predetermined motion of the input device may be determined based on the motion which is related to the images, included in the captured image captured by the imaging means, of the predetermined imaging targets and which is obtained in the captured image, but the present invention is not limited thereto. It is possible to determine the motion of the input device based also on a captured image analysis method known to those skilled in the art.

Further, in the first aspect, the motion of the input device which is determined in the first determining step and the motion of the input device which is determined in the second determining step may be the same or may be different from each other.

(1) Case where the First Determining Step and the Second Determining Step Determine the Same Motion

In this case, for example, both the first determining step and the second determining step may determine whether or not the input device has performed the linear motion (movement) in a predetermined direction, or may determine whether or not the input device has rotated around a predetermined axis. First, described is the case where both the first determining step and the second determining step determine whether or not the input device has performed the linear motion in the predetermined direction. The first determining step can determine, based on a target object having moved in the captured image, whether or not the input device has performed the linear motion in a direction orthogonal to the capturing direction (Note that when the target object has moved in the captured image, the input device may have rotated. However, when it is not required to accurately determine the motion of the input device, it may be determined, based on the target object having moved in the captured image, that the input device has performed the linear motion in the direction orthogonal to the capturing direction.). Then, the acceleration sensor may be provided as the motion detecting means so as to detect the acceleration generated in at least one direction orthogonal to the capturing direction, whereby the second determining step can determine whether or not the input device has performed the linear motion in the direction orthogonal to the capturing direction. Although the first determining step can determine the linear motions in predetermined directions orthogonal to the capturing direction, the linear motion in a detection direction of the acceleration sensor may be determined among the linear motions, whereby the first determining step and the second determining step can determine the linear motion in a common direction. Alternatively, an at least two-axial acceleration sensor may be provided so as to detect the accelerations generated in two directions orthogonal to the capturing direction, whereby the second determining step can determine the linear motions in the predetermined directions orthogonal to the capturing direction, and therefore the first determining step and the second determining step can determine the linear motion in a common direction. Further, in the case of using a two-axial or three-axial acceleration sensor, it is possible to determine the orientation (only a two-dimensional orientation in the case of using the two-axial acceleration sensor) of the input device. Consequently, a detection value of the acceleration sensor and the captured image may be corrected in accordance with the determined orientation, whereby the first determining step and the second determining step can also determine the linear motion in a vertical direction or in a horizontal direction.

Next, described is the case where both the first determining step and the second determining step determine whether the input device has rotated around the predetermined axis. The first determining step can determine the rotation around the axis of the capturing direction. Then, the acceleration sensor or the gyro-sensor may be used as the motion detecting means. For example, the acceleration sensor may be provided so as to detect the acceleration generated in the direction orthogonal to the capturing direction and the input device may typically be rotated around the axis of the capturing direction such that the capturing direction is the horizontal direction, whereby the second determining step can determine the rotation around the axis of the capturing direction based on the magnitude of the gravitational acceleration detected by the acceleration sensor. Further, an at least two-axial acceleration sensor may be provided so as to detect the accelerations generated in two directions orthogonal to the capturing direction, whereby it is possible to determine, based on the two detection values, the rotation around the axis of the capturing direction more accurately. In the case of using the gyro-sensor, the gyro-sensor may be provided so as to detect the rotation around the axis of the capturing direction, whereby the second determining step can directly detect the rotation around the axis of the capturing direction. Furthermore, when the input device has rotated around an axis orthogonal to the capturing direction, the target object moves, in the captured image, in the direction orthogonal to the orthogonal axis, whereby the first determining step can also determine the rotation around the axis orthogonal to the capturing direction (When the target object has moved in the captured image, the input device may have performed the linear motion. However, as described above, when it is not required to accurately determine the motion of the input device, it may be determined that the input device has rotated around the axis orthogonal to the capturing direction.). Then, the acceleration sensor may be provided so as to detect the acceleration generated in the capturing direction and the input device may typically be rotated so as to change the capturing direction to a vertically upward/downward direction, whereby the second determining step can determine the rotation around the axis orthogonal to the capturing direction based on the magnitude of the gravitational acceleration detected by the acceleration sensor. Further, an at least two-axial acceleration sensor may be provided so as to detect the acceleration generated in the capturing direction and the acceleration in the direction orthogonal to the capturing direction, whereby it is possible to determine, based on the two detection values, the rotation around the axis orthogonal to the capturing direction more accurately. In the case of using the gyro-sensor, the gyro-sensor may be provided so as to detect the rotation around the axis orthogonal to the capturing direction, whereby the second determining step can directly determine the rotation around the axis orthogonal to the capturing direction. Consequently, the first determining step and the second determining step can determine the rotation around a common axis.

Note that when the first determining step and the second determining step determine the same motion, the first process executing step executes the predetermined process when either one of the first determining step and the second determining step has determined the same motion. That is, the first determining step and the second determining step complementarily determine the same motion.

(2) Case where the First Determining Step and the Second Determining Step Determine the Motions Different from Each Other

In this case, for example, the first determining step may determine the linear motion in a first direction while the second determining step may determine the linear motion in a second direction, or the first determining step may determine the rotation around a first axis while the second determining step may determine the rotation around a second axis. Further, the first determining step may determine the linear motion while the second determining step may determine the rotation, or the first determining step may determine the rotation while the second determining step may determine the linear motion.

For example, the acceleration sensor may be provided as the motion detecting means so as to detect the acceleration generated in the capturing direction. The first determining step can determine whether or not the input device has performed the linear motion in the direction orthogonal to the capturing direction, and the second determining step, on the other hand, can determine whether or not the input device has performed the linear motion in the capturing direction, whereby it is possible to determine whether or not the input device has performed the linear motion in the capturing direction and the linear motion in the direction orthogonal to the capturing direction.

Alternatively, the acceleration sensor may be provided as the motion detecting means so as to detect the acceleration generated in the capturing direction (or so as to detect the acceleration generated in the capturing direction and the acceleration generated in the direction orthogonal to the capturing direction), or the gyro-sensor may be provided so as to detect the rotation around the axis orthogonal to the capturing direction. The first determining step can determine whether or not the input device has rotated around the axis of the capturing direction, and the second determining step, on the other hand, can determine whether or not the input device has rotated around the axis orthogonal to the capturing direction, whereby it is possible to determine whether or not the input device has rotated around the axis of the capturing direction and rotated around the axis orthogonal to the capturing direction.

Alternatively, the acceleration sensor may be provided as the motion detecting means so as to detect the acceleration generated in the direction orthogonal to the capturing direction. The first determining step can determine whether or not the input device has rotated around the axis of the capturing direction, and the second determining step, on the other hand, can determine whether or not the input device has performed the linear motion in the direction orthogonal to the capturing direction, whereby it is possible to determine whether or not the input device has rotated around the axis of the capturing direction and performed the linear motion in the direction orthogonal to the capturing direction.

Alternatively, the acceleration sensor may be provided as the motion detecting means so as to detect the acceleration generated in the capturing direction. The first determining step can determine whether or not the input device has rotated around the axis of the capturing direction, and the second determining step, on the other hand, can determine whether or not the input device has performed the linear motion in the capturing direction, whereby it is possible to determine whether or not the input device has rotated around the axis of the capturing direction and performed the linear motion in the capturing direction.

Note that the motions to be determined in the first determining step and the second determining step are not limited to a simple linear motion or a simple rotation, and may be a motion into which a plurality of types of motions, such as one that provides a predetermined trajectory, are combined.

Further, the first process executing step may execute a first process using the determination result of the first determining step and then may execute a second process different from the first process using the determination of the second determining step. Alternatively, as in the below-described embodiment, the first process executing step may determine the rotation of the input device in more detail by synthesizing the determination result of the first determining step and the determination result of the second determining step and then may execute a predetermined process using the resultant determination result. In the first case, for example, an obj ect may be controlled tomove in a left/right direction (i. e. , in the left/right direction of a display screen or in the left/right direction of the object) or may be rotated and displayed (i.e., rotated around an axis orthogonal to the display screen or rotated around the axis of a front/rear direction of the object), in accordance with the determination result of the first determining step (i.e., in accordance with the rotation around the axis of the capturing direction of the imaging means). Further, the object may be controlled to move in the front/rear direction (i.e., in a perspective direction of the display screen or in the front/rear direction of the object), may be controlled to move in an upward/downward direction (i.e., in the upward/downward direction of the display screen or in the upward/downward direction of the object), or may be rotated and displayed (i.e., rotated around the axis of a direction parallel to the display screen or rotated around the axis of the left/right direction of the object), in accordance with the determination result of the second determining step (i.e., in accordance with the rotation around the axis of a direction different from the capturing direction of the imaging means). More generally, the object may be caused to perform a first motion, using the determination result of the first determining step and may be caused to perform a second motion different from the first motion, using the determination result of the second determining step. That is, the rotations around two different axes of the input device may be detected and two different processes may be performed for the corresponding rotations, whereby it is possible to perform inputs for the two different processes which are different depending on the rotation operation of the input device.

In a second aspect, in the second determining step, the computer may determine a motion (e.g., a motion in an upward direction) of the same type as the predetermined motion determined in the first determining step. In this aspect, in the first process executing step, the computer executes the predetermined process when it is determined, in at least either one of the first determining step and the second determining step, that the predetermined motion has been performed.

In a third aspect, the motion detecting means may be an acceleration sensor. In this aspect, in the first determining step, the computer may determine, based on the motion which is related to the images, included in the captured image, of the imaging targets and which is obtained in the captured image, whether or not the input device has moved or rotated in a predetermined direction (S38). In this aspect, in the second determining step, the computer determines, based on the motion of the input device which is calculated based on the detection result of the acceleration sensor, whether or not the input device has moved in the predetermined direction (S41). In the first process executing step, the computer executes the predetermined process when it is determined, in at least either one of the first determining step and the second determining step, that the motion of the input device has been performed.

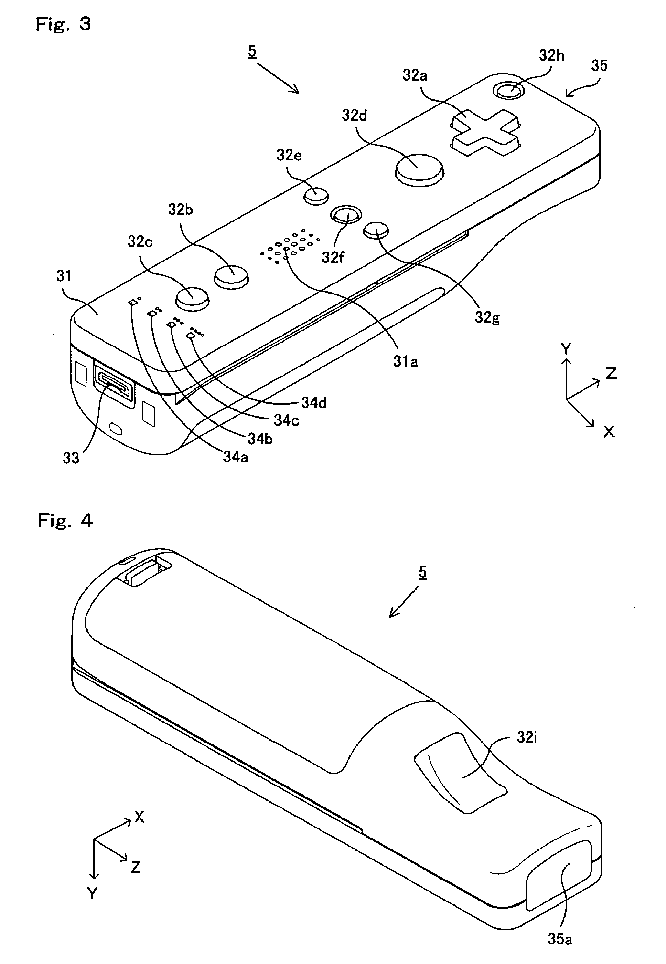

Further, in the third aspect, the "predetermined direction" may be a predetermined direction (a direction fixed in the input device : e.g., an X-axis direction and a Y-axis direction shown in FIG. 3) provided in the input device, or may be the vertical direction and the horizontal direction. In the latter case, in the second determining step, for example, the acceleration sensor may be provided so as to detect the acceleration in the predetermined direction and the component of the gravitational acceleration may be removed from the detection result of the acceleration sensor, whereby it is possible to calculate the motion of the input device. Further, for example, the acceleration sensor may be an at least one-axial (preferably, three-axial) acceleration sensor and the current orientation (a two-dimensional orientation in the case of using a two-axial acceleration sensor) of the input device may be calculated based on the output from the acceleration sensor, whereby the first determining step and the second determining step can calculate the motion of the input device by correcting the output value from the acceleration sensor and the captured image based on the calculated current orientation. Based on the motion of the input device which is calculated as described above, it is possible to determine whether or not the input device has moved in the predetermined direction. Note that the first determining step may determine, without correcting the rotation based on the orientation of the input device (i.e., on the assumption that the user is properly holding the input device), whether or not the input device has moved in the vertical direction (or in the horizontal direction). That is, it may be determined whether or not the input device has moved in the vertical direction (e.g., the below-described Y-axis direction shown in FIG. 3) which is the predetermined direction of the input device when the user is properly holding the input device. In this case, the second determining step corrects the rotation based on the orientation of the input device. Consequently, it may be determined whether or not the input device has moved in the vertical direction (or in the horizontal direction) related to the actual current orientation (even when the user is holding the input device in any manner).

In a fourth aspect, the information processing program may further cause the computer to execute a third determining step (S39) of, based on a tilt of the input device which is calculated based on the detection result of the acceleration sensor and which is related to a rotation around an axis of a horizontal direction (more specifically, the horizontal direction orthogonal to the capturing direction), determining the rotation of the input device around the axis of the horizontal direction. In this aspect, in the first determining step, the computer determines whether or not the input device has moved or rotated in a vertical direction. In the second determining step, the computer determines whether or not the input device has moved in the vertical direction. In the first process executing step, the computer executes the predetermined process when it is determined, in at least one of the first determining step, the second determining step, and the third determining step, that the motion of the input device has been performed.

Further, the acceleration sensor is capable of detecting the acceleration in at least one axis and is provided in the input device so as to detect the acceleration generated in the predetermined direction (in the direction fixed in the input device) of the input device. The below-described second tilt calculating step may determine the component of the gravitational acceleration in the detection direction of the acceleration sensor, whereby it is possible to calculate the tilt related to the rotation around an axis orthogonal to the detection direction. For example, the acceleration sensor may be provided so as to detect the acceleration generated in the capturing direction (e.g., the below-described Z-axis direction shown in FIG. 3) of the imaging means. In this case, the component of the gravitational acceleration generated in the capturing direction changes, as a result of the tilt of the input device changing such that the capturing direction of the input device changes in the vertically upward/downward direction. Accordingly, the acceleration sensor may detect the change of the component of the gravitational acceleration, whereby it is possible to determine the tilt (which is the angle formed by a capturing axis and a horizontal plane) related to the rotation around a horizontal axis orthogonal to the capturing direction.

Further, the acceleration sensor capable of detecting the accelerations in two axes may be provided so as to detect the acceleration generated in the capturing direction (e.g., the below-described Z-axis direction shown in FIG. 3) of the imaging means and the acceleration generated in a direction A (e.g., the below-described Y-axis direction shown in FIG. 3) orthogonal to the capturing direction. In this case, both the detection values of the acceleration sensor which are related to the two directions change, as a result of the tilt of the input device changing such that both the capturing direction and the orthogonal direction A change in the vertically upward/downward direction (i.e., as a result of the tilt of the input device changing such that both the below-described Z-axis and Y-axis shown in FIG. 3 change in the vertically upward/downward direction). Based on the two detection values, it is possible to calculate the tilt (which is the angle formed by the capturing axis and the horizontal plane) related to the rotation around the axis (e.g., of the below-described X-axis direction shown in FIG. 3) orthogonal to both the capturing direction and the direction A.

Note that a "tilt related to the rotation around the axis of a certain direction" as used herein refers to a tilt which changes based on the rotation around the axis of the certain direction, and refers to a tilt of which the tilt angle is the rotation angle calculated from a reference orientation. More specifically, the "tilt related to the rotation around the axis of a certain direction" represents to what degree, among the axes (the axes fixed in the input device: e.g., the below-described X-axis, Y-axis, and Z-axis shown in FIG. 3) of the input device, a predetermined axis (e.g., the X-axis or the Y-axis shown in FIG. 3) orthogonal to a certain direction (e.g., the Z-axis direction shown in FIG. 3) is, based on the predetermined axis provided in the reference orientation, rotated around the axis of the certain direction when provided in the current orientation.

Note that in the third determining step, the tilt related to the rotation around the axis of the horizontal direction is determined or calculated based on the detection value of the acceleration sensor, and the rotation around the axis of the horizontal direction is determined based on the determination or calculation result. The tilt (the tilt based on the horizontal direction) related to the rotation around the axis of the horizontal direction is calculated, for example, as follows.

(1) Case where the Tilt Based on the Horizontal Direction is Designed to be Calculable on the Assumption that the User Performs a Predetermined Operation

The acceleration sensor may be provided so as to detect the acceleration generated in one axis (e.g., the Y-axis or the Z-axis shown in FIG. 3 in the below-described embodiment) orthogonal to one predetermined axis (e.g., the X-axis shown in FIG. 3 of the below-described embodiment) fixed in the input device, whereby it is possible to calculate the tilt based on the horizontal direction on the assumption that the user rotates the input device around the one predetermined axis (i.e. , the rotation for causing the one orthogonal axis to turn in the vertically upward/downward direction), keeping the one predetermined axis directed in the horizontal direction. Further, in this case, the acceleration sensor may be provided so as to detect the accelerations generated in two axes (e. g. , the Y-axis and the Z-axis in the below-described embodiment) orthogonal to the one predetermined axis, whereby it is possible to calculate the tilt of the input device more accurately, using the detection values representing the two accelerations generated in the two orthogonal axes.

(2) Case where the Tilt Based on the Horizontal Direction is Designed to be Calculable even when the User Operates the Input Device in Any Manner

Although in the above (1), the tilt based on the horizontal direction is designed on the assumption that the user rotates the input device in a state where the one predetermined axis is directed in the horizontal direction, the tilt may also be designed to be calculable on the assumption that the user rotates the input device in a state where an arbitrary axis of the input device is directed in the horizontal direction. In this case, the acceleration sensor capable of detecting the accelerations in three axes may be used. For example, it is possible to calculate the tilt related to the rotation around the arbitrary horizontal axis by a method of the below-described embodiment.

Further, similarly to the above (1) and (2), also when the motion in the vertical direction and the like are determined in the first determining step and in the second determining step, the determinations may be made on the assumption (1) that the user performs the predetermined operation or (2) that the user operates the input device in a state where the input device is in an arbitrary orientation. For example, the first determining step can determine the movement in the vertical direction, based on the change of the position related to the images of the imaging targets and provided in the captured image. That is, in the case of (1), the movement in the vertical direction may be determined based on the change of the position (the coordinates) related to a predetermined one-axial direction. In the case of (2), the movement in the vertical direction may be determined based on the change of a position calculated with the orientation of the input device taken into account by correcting the position (the coordinates) related to the images of the imaging targets in accordance with the orientation (which can be calculated based on the output result of the acceleration sensor) of the input device. Further, for example, in the second determining step, in the case of (1), the movement in the vertical direction may be determined based on the change of the acceleration related to the predetermined one-axial direction. Furthermore, in the case of (2), the movement in the vertical direction may be determined based on the change of a vector calculated with the orientation of the input device taken into account by correcting a vector representing the accelerations in three-axial directions in accordance with the orientation of the input device (e.g., a process of step S8).

In a fifth aspect, the information processing program may further cause the computer to execute a first tilt calculating step (S22), a second tilt calculating step (S5), and an orientation calculating step (S27). In the first tilt calculating step, based on a tilt which is related to the images, included in the captured image captured by the imaging means, of the imaging targets and which is obtained in the captured image, the computer calculates, as a first tilt, a tilt of the input device which is related to a rotation around an axis of a capturing direction of the imaging means. In the second tilt calculating step, based on the detection result of the acceleration sensor, the computer calculates, as a second tilt, the tilt of the input device which is related to the rotation around the axis of the horizontal direction. In the orientation calculating step, the computer calculates an orientation of the input device based on the first tilt and the second tilt. In the third determining step, the computer determines the rotation of the input device based on the second tilt. In the second determining step, the computer makes the determination, using a motion of the input device which is obtained by correcting, based on the orientation calculated in the orientation calculating step, accelerations in three-axial directions which are detected by the acceleration sensor.

Note that in the first tilt calculating step of the fifth aspect, the tilt related to the rotation around the axis of the capturing direction may be calculated by analyzing the captured image. Typically, the predetermined imaging targets (markers 6a and 6b) are captured by the imaging means, and a first tilt is calculated based on the tilt (the tilt of a line connecting the markers 6a and 6b to each other) which is related to the images, included in the captured image, of the imaging targets and which is obtained in the captured image. However, it is not essential to provide, as the predetermined imaging targets, specific imaging targets such as the markers 6a and 6b. When the specific imaging targets are not provided, it is possible to determine the rotation around the axis of the capturing direction by comparing the captured image obtained at a certain point in time to the captured image obtained at another point in time thereafter and then calculating the change of the tilt of the same target object included in both of the captured images, whereby it is possible to determine the tilt related to the rotation around the axis of the capturing direction.

Note that a tilt calculated in the first tilt calculating step and in the second tilt calculating step may be represented by an angle calculated from a predetermined tilt represented as a reference (0°), or may be represented by a vector. Further, the tilt may only be represented by an arbitrary unit, e.g., a unit of 1° or a unit of 90°. The tilt may be represented by only two values indicating, for example, whether the input device is directed in the horizontal direction or in the vertical direction.

In a sixth aspect, the acceleration sensor may be capable of outputting an output value which varies in accordance with the rotation around the axis of the capturing direction of the imaging means. In this aspect, the information processing program may further cause the computer to execute a determining step (S21) and a third tilt calculating step (S23, S24). In the determining step, based on a state of the imaging targets being captured by the imaging means, the computer determines whether or not it is possible to calculate the first tilt in the first tilt calculating step. In the third tilt calculating step, the computer calculates the first tilt based on the output value from the acceleration sensor when it is determined in the determining step that it is impossible to calculate the first tilt.

The acceleration sensor may be provided, for example, so as to detect the acceleration generated in the capturing direction. Preferably, the acceleration sensor may be provided so as to detect the acceleration generated in the capturing direction (e.g., the below-described Z-axis direction shown in FIG. 3) and the acceleration generated in a certain direction A (e.g., the below-described Y-axis direction shown in FIG. 3) orthogonal to the capturing direction. Consequently, the input device may be rotated around an axis (e.g., the below-described X-axis shown in FIG. 3) orthogonal to both the capturing direction and the direction A (typically, keeping the orthogonal axis horizontal), whereby the third tilt calculating step can determine the tilt related to the rotation around the orthogonal axis.

In a seventh aspect, the motion detecting means may be an acceleration sensor. In this aspect, in the first determining step, the computer determines, based on the motion which is related to the images, included in the captured image, of the imaging targets and which is obtained in the captured image, whether or not the input device has moved or rotated in the vertical direction (S38) . In this aspect, in the second determining step, the computer determines a rotation of the input device based on a tilt of the input device which is calculated based on the detection result of the acceleration sensor and which is related to a rotation around an axis of a horizontal direction (S39). In the first process executing step, the computer executes the predetermined process when it is determined, in at least either one of the first determining step and the second determining step, that the motion of the input device has been performed.

In an eighth aspect, in the first determining step, the computer may determine whether or not the input device has rotated around an axis of a capturing direction of the imaging means. In this aspect, in the second determining step, the computer determines, based on the detection result of the sensor, whether or not the input device has rotated around the axis of the capturing direction. In the first process executing step, the computer executes the predetermined process when it is determined, in at least either one of the first determining step and the second determining step, that the input device has rotated.

In a ninth aspect, in the first determining step, the computer may determine the predetermined motion of the input device based on a position which is related to the images, included in the captured image captured by the imaging means, of the predetermined imaging targets and which is provided in the captured image. In this aspect, the information processing program further causes the computer to execute a second process executing step of executing a process different from the predetermined process based on the position which is related to the images, included in the captured image captured by the imaging means, of the imaging targets and which is provided in the captured image.

Further, a tenth aspect is a computer-readable storage medium having stored therein an information processing program (the game program 60) executed by a computer (the CPU 10, etc.) of an information processing apparatus (the game apparatus 3) for performing a process determined in accordance with a tilt of an input device (the controller 5). The input device includes imaging means (the image pickup element 40) for capturing predetermined imaging targets (the marker section 6) and motion detecting means (the acceleration sensor 37) for detecting a motion of the input device. The information processing program causes the computer to execute a first determining step (S22), a second determining step (S5), and a process executing step (S27). In the first determining step, the computer determines a predetermined tilt of the input device based on a tilt which is related to images, included in a captured image captured by the imaging means, of predetermined imaging targets and which is obtained in the captured image. In the second determining step, the computer determines the predetermined tilt of the input device based on the detection result of the motion detecting means. In the process executing step, the computer executes a predetermined process in accordance with the determination result of the first determining step and the determination result of the second determining step.

In an eleventh aspect, the motion detecting means may be a sensor for outputting a value which varies in accordance with a rotation around an axis of a predetermined direction different from a capturing direction of the imaging means of the input device. In this aspect, in the first determining step, the computer determines, based on the tilt which is related to the images, included in the captured image captured by the imaging means, of the imaging targets and which is obtained in the captured image, a tilt of the input device which is related to a rotation around an axis of the capturing direction. In the second determining step, the computer determines, based on the output value from the sensor, a tilt of the input device which is related to the rotation around the axis of the predetermined direction. In the process executing step, the computer calculates an orientation of the input device based on the first tilt and the second tilt.

In the twelfth aspect, the sensor may be an acceleration sensor capable of detecting accelerations in three-axial directions separately. In this aspect, in the process executing step, the computer further calculates the motion of the input device by correcting, based on the calculated orientation, the accelerations in the three-axial directions which are detected by the acceleration sensor.

Further, the present invention may be provided as an information processing apparatus having the same functions as those of the information processing apparatus for executing each step as described above.

Based on the first aspect, since the motion of the input device is determined by the imaging means and by the motion detecting means, separately, it is possible to sense the motion of the input device more accurately than to sense the motion by only a motion sensor such as an acceleration sensor.

Based on the second through eighth aspects, the same motion of the input device is determined by the imaging means and by the motion detecting means. Then, the predetermined process is executed when the motion in a predetermined direction has been determined by either one of the imaging means and the motion detecting means. The same motion may be sensed by two types of methods as described above, whereby it is possible to sense the motion of the input device more accurately than to sense the motion based only on the acceleration.

Further, based on the fourth aspect, the predetermined process is executed when the motion of the input device has been determined in at least one of the first determining step, the second determining step, and the third determining step. Thus, it is possible to sense the motion of the input device more certainly.

Furthermore, based on the fifth aspect, the third determining step makes the determination based on the second tilt and also the second determining step makes the determination based on the motion of the input device which is calculated using the same second tilt. Thus, the second determining step can accurately make the determination since it is possible to accurately calculate the motion of the input device, and can also simplify the process by calculating the orientation of the input device using the second tilt used in the third determining step.

Based on the sixth aspect, even when the first tilt calculating step cannot calculate the first tilt since the imaging targets have not been captured by the imaging means, it is still possible to calculate the first tilt. It is impossible to calculate the first tilt using the imaging means when the imaging targets have not been captured by the imaging means. In contrast, it is always possible to calculate the first tilt using the acceleration sensor. Thus, based on the seventh aspect, it is always possible to calculate the orientation of the input device, and therefore is possible to provide the input device having a higher operability.

Based on the ninth aspect, it is possible to use, for a game operation, an operation of specifying a pointing position by the input device and an operation of moving the input device.

Based on the tenth aspect, since the tilt of the input device is determined by the imaging means and by the motion detecting means, separately, it is possible to sense the tilt of the input device more accurately than to sense the tilt by only a motion sensor such as an acceleration sensor.

Based on the eleventh aspect, since the tilt of the input device is calculated by the imagingmeans and by the motion detecting means, separately, and the orientation of the input device is calculated based on the calculation results, it is possible to calculate the orientation of the input device more accurately.

Based on the twelfth aspect, the orientation accurately calculated may be used, whereby it is possible to accurately calculate the motion of the input device based on the detection result of the acceleration sensor.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is an external view of a game system 1;
FIG. 2 is a functional block diagram of a game apparatus 3;
FIG. 3 is a perspective view showing an external appearance of a controller 5;
FIG. 4 is a perspective view showing an external appearance of the controller 5;
FIG. 5A is a diagram showing an internal structure of the controller 5;
FIG. 5B is a diagram showing an internal structure of the controller 5;
FIG. 6 is a block diagram showing a structure of the controller 5;
FIG. 7 is a schematic diagram showing a state where a game operation is performed using the controller 5;
FIG. 8 is a diagram showing an example of a game image displayed on a display screen of a TV 2 in the present embodiment;
FIG. 9 is a diagram showing main data stored in a main memory of the game apparatus 3;
FIG. 10 is a main flow chart showing the flow of a process performed by the game apparatus 3;
FIG. 11 is a diagram illustrating a method of calculating an upward/downward tilt of the controller 5;
FIG. 12 is a flow chart showing the flow of a rotation matrix calculation process (step S7) shown in FIG. 10;
FIG. 13 is a diagram illustrating a method of calculating a roll-direction tilt based on marker coordinates;
FIG. 14 is a diagram illustrating a method of calculating the roll-direction tilt based on an acceleration vector;
FIG. 15 is a flow chart showing the flow of an operation sensing process (step S10) shown in FIG. 10;
FIG. 16 is a flow chart showing the flow of the rotation matrix calculation process performed by a modification of the present embodiment; and
FIG. 17 is a flow chart showing a part of the flow of a process performed by the modification of the present embodiment.

DESCRIPTION OF THE PREFERRED EMBODIMENTS

(Overall Structure of the Game System)

With reference to FIG. 1, a game system 1 including a game apparatus according to an embodiment of the present invention will be described. FIG. 1 is an external view of the game system 1. Hereinafter, a game apparatus and a game program according to the present embodiment will be described. In the following example, the game apparatus is a stationary game apparatus. As shown in FIG. 1, the game system 1 includes a TV receiver 2 (hereinafter, referred to simply as a "TV") 2, a game apparatus 3, an optical disc 4, a controller 5, and a marker section 6. In the game system 1, game processing is executed by the game apparatus 3 based on a game operation performed using the controller 5.

In the game apparatus 3, the optical disc 4 is detachably mounted as an example of an information storage medium exchangeably used for the game apparatus 3. The optical disc 4 has stored therein the game program to be executed by the game apparatus 3. The game apparatus 3 has an insertion opening on the front surface thereof for mounting the optical disc 4. The game apparatus 3 reads and executes the game program stored in the optical disc 4 inserted into the insertion opening, and thus executes the game processing.

The game apparatus 3 is connected to the TV 2 as an exemplary display device via a connection cord. The TV 2 displays a game image obtained as a result of the game processing executed by the game apparatus 3. Further, the marker section 6 is provided in the vicinity of a display screen of the TV 2 (above the display screen in FIG. 1). The marker section 6 includes two markers 6R and 6L respectively at two ends thereof. Specifically, the marker 6R (also the marker 6L) includes one or more infrared LEDs, and outputs infrared light forward from the TV 2. The marker section 6 is connected to the game apparatus 3, and the game apparatus 3 can control each of the infrared LEDs to be lit on or off.

The controller 5 is an input device for providing the game apparatus 3 with operation data representing the particulars of the operation performed thereon. The controller 5 and the game apparatus 3 are connected to each other via wireless communication. In the present embodiment, the controller 5 and the game apparatus 3 wirelessly communicate with each other by, for example, the Bluetooth (registered trademark) technology. Note that in another embodiment, the controller 5 and the game apparatus 3 may be connected to each other in a wired manner.

(Internal Structure of the Game Apparatus 3)

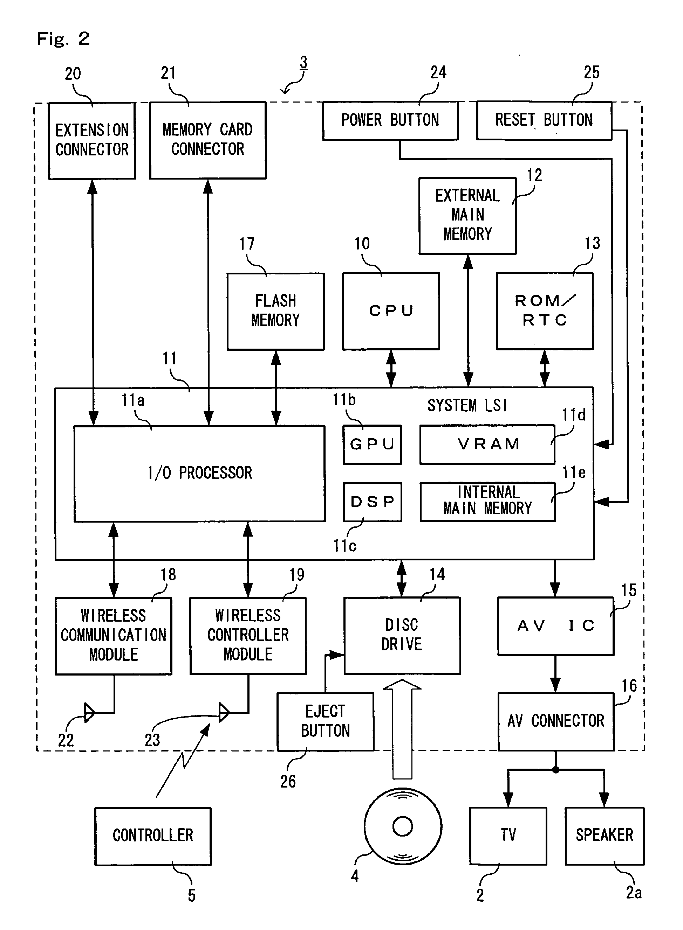

Next, with reference to FIG. 2, an internal structure of the game apparatus 3 will be described. FIG. 2 is a block diagram showing a structure of the game apparatus 3. The game apparatus 3 includes a CPU 10, a system LSI 11, an external main memory 12, a ROM/RTC 13, a disc drive 14, an AV-IC 15, and the like.

The CPU 10 executes the game processing by executing the game program stored in the optical disc 4, and acts as a game processor. The CPU 10 is connected to the system LSI 11. The system LSI 11 is connected to the CPU 10 and also to the external main memory 12, the ROM/RTC 13, the disc drive 14 and the AV-IC 15. The system LSI 11, for example, controls data transfer between the elements connected thereto, generates images to be displayed, and obtains data from external devices. An internal structure of the system LSI 11 will be described below. The external main memory 12, which is of a volatile type, stores therein programs including the game program read from the optical disc 4, the game program read from a flash memory 17, or various other data. The external main memory 12 is used as a work area or a buffer area of the CPU 10. The ROM/RTC 13 includes a ROM (a so-called boot ROM) having a program for starting the game apparatus 3 incorporated therein and a clock circuit (RTC: Real Time Clock) for counting time. The disc drive 14 reads program data, texture data or the like from the optical disc 4 and writes the read data into the below-described internal main memory 11e or the external main memory 12.

Further, the system LSI 11 includes an input/output processor (I/O processor) 11a, a GPU (Graphics Processor Unit) 11b, a DSP (Digital Signal Processor) 11c, a VRAM 11d, and an internal main memory 11e. Although not shown in the figures, these elements 11a through 11e are connected to one another via an internal bus.

The GPU 11b is a part of drawing means and generates an image in accordance with a graphics command (a command to draw an image) from the CPU 10. The VRAM 11d stores data (polygon data, texture data, etc.) necessary for the GPU 11b to execute the graphics command. The GPU 11b uses the data stored in the VRAM 11d to generate image data.

The DSP 11c acts as an audio processor and generates audio data using sound data or sound wave (sound tone) data stored in the internal main memory 11e or the external main memory 12.

The image data and the audio data which have been generated as described above are read by the AV-IC 15. The AV-IC 15 outputs the read image data to the TV 2 via an AV connector 16, and also outputs the read audio data to a speaker 2a built in the TV 2. Thus, the image is displayed on the TV 2 and also the sound is outputted from the speaker 2a.

The input/output processor 11a transmits or receives data to or from the elements connected thereto, or downloads data from external devices. The input/output processor 11a is connected to the flash memory 17, a wireless communication module 18, a wireless controller module 19, an expansion connector 20, and a memory card connector 21. The wireless communication module 18 is connected to an antenna 22, and the wireless controller module 19 is connected to an antenna 23.

The input/output processor 11a is connected to a network via the wireless communication module 18 and the antenna 22, and thus can communicate with other game apparatuses or various servers also connected to the network. The input/output processor 11a periodically accesses the flash memory 17, and detects the presence or absence of data required to be transmitted to the network. When the data is present, the input/output processor 11a transmits the data to the network via the wireless communication module 18 and the antenna 22. Via the network, the antenna 22 and the wireless communication module 18, the input/output processor 11a also receives data transmitted from other game apparatuses or data downloaded from a download server, and stores the received data into the flash memory 17. The CPU 10 executes the game program and thus reads the data stored in the flash memory 17 to be used for the game program. The flash memory 17 may have stored therein data (data stored after or during the game) saved as a result of playing the game using the game apparatus 3 as well as the data to be transmitted to, or data received from, the other game apparatuses or various servers.

Further, the input/output processor 11a receives, via the antenna 23 and the wireless controller module 19, the operation data transmitted from the controller 5, and stores (temporarily stores) the operation data into a buffer area of the internal main memory 11e or the external main memory 12.

Furthermore, the input/output processor 11a is connected to the expansion connector 20 and the memory card connector 21. The expansion connector 20 is a connector for an interface such as USB or SCSI. The expansion connector 20 may be connected to a medium such as an external storage medium, may be connected to a peripheral device such as another controller, or may be connected to a wired communication connector, so as to communicate with the network instead of the wireless communication module 18. The memory card connector 21 is a connector for an external storage medium such as a memory card. For example, the input/output processor 11a can access an external storage medium via the expansion connector 20 or the memory card connector 21 and can store or read data.

The game apparatus 3 has a power button 24, a reset button 25, and an eject button 26. The power button 24 and the reset button 25 are connected to the system LSI 11. When the power button 24 is turned on, the elements of the game apparatus 3 are provided with power via an AC adaptor (not shown). When the reset button 25 is pressed, the system LSI 11 restarts a startup program of the game apparatus 3. The eject button 26 is connected to the disc drive 14. When the eject button 26 is pressed, the optical disc 4 is dismounted from the disc drive 14.

(Structure of the Controller 5)

With reference to FIG. 3 through FIG. 6, the controller 5 will be described. FIG. 3 and FIG. 4 are perspective views showing external appearances of the controller 5. FIG. 3 is a perspective view showing the controller 5 as viewed from the top rear side thereof. FIG. 4 is a perspective view showing the controller 5 as viewed from the bottom front side thereof.

As shown in FIG. 3 and FIG. 4, the controller 5 includes a housing 31 formed by plastic molding or the like. The housing 31 has a generally parallelepiped shape extending in a longitudinal direction (a Z-axis direction shown in FIG. 3) from front to rear. The overall size of the housing 31 is small enough to be held by one hand of an adult or even a child. A player can perform a game operation, for example, by pressing buttons provided in the controller 5 or moving the controller 5 per se and by changing the position and the orientation thereof.

The housing 31 has a plurality of operation buttons. As shown in FIG. 3, provided on the top surface of the housing 31 are a cross key 32a, a first button 32b, a second button 32c, an A button 32d, a minus button 32e, a home button 32f, a plus button 32g, and a power button 32h. As shown in FIG. 4, a recessed portion is formed on the bottom surface of the housing 31, and a B button 32i is provided on a slope surface of the recessed portion. The operation buttons 32a through 32i are assigned various functions in accordance with the game program executed by the game apparatus 3. The power button 32h is intended to remote-control the power of the main body of the game apparatus 3 to be on or off. The home button 32f and the power button 32h have the top surfaces thereof buried in the top surface of the housing 31, so as not to be inadvertently pressed by the player.

On the rear surface of the housing 31, a connector 33 is provided. The connector 33 is used for connecting the controller 5 to another device (e.g., another controller).

In a rear part of the top surface of the housing 31, a plurality of LEDs (four LEDs 34a through 34d in FIG. 3) are provided. The controller 5 is assigned a controller type (number) so as to be distinguishable from the other controllers 5. The LEDs 34 are used for, for example, informing the player of the controller type currently set for the controller 5 that he/she is using, or for informing the player of the remaining battery amount. Specifically, when the controller 5 is used for the game operation, one of the plurality of LEDs 34a through 34d is lit up in accordance with the corresponding controller type.

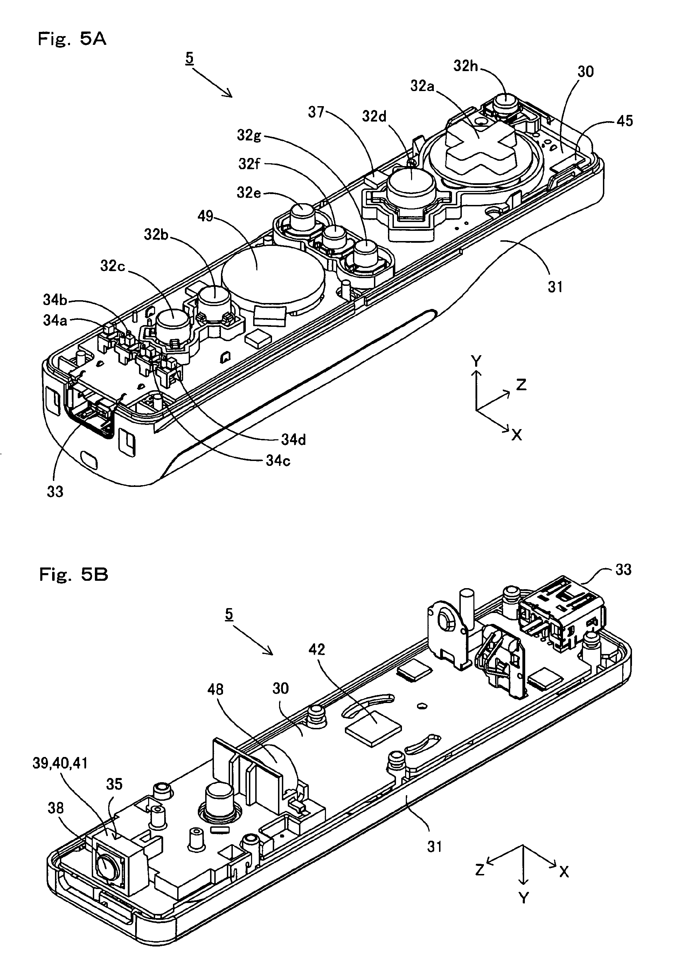

Further, the controller 5 includes an imaging information calculation section 35 (FIG. 5B). As shown in FIG. 4, a light incident surface 35a of the imaging information calculation section 35 is provided on the front surface of the housing 31. The light incident surface 35a is formed of a material which allows infrared light from the markers 6R and 6L to at least pass therethrough.

Between the first button 32b and the home button 32f on the top surface of the housing 31, sound holes 31a are formed for releasing, to the outside, a sound from a speaker 49 (FIG. 5A) built in the controller 5.

Next, with reference to FIG. 5A and FIG. 5B, an internal structure of the controller 5 will be described. FIG. 5A and FIG. 5B are diagrams showing an internal structure of the controller 5. Note that FIG. 5A is a perspective view showing a state where an upper casing (a part of the housing 31) of the controller 5 is removed. FIG. 5B is a perspective view showing a state where a lower casing (a part of the housing 31) of the controller 5 is removed. FIG. 5B is a perspective view showing the reverse side of a substrate 30 shown in FIG. 5A.

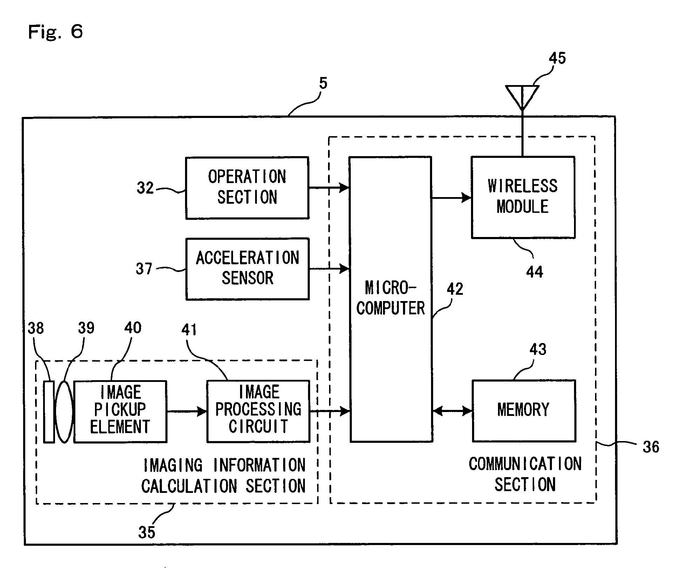

As shown in FIG. 5A, the substrate 30 is fixed inside the housing 31. On the top main surface of the substrate 30, the operation buttons 32a through 32h, the LEDs 34a through 34d, an acceleration sensor 37, an antenna 45, the speaker 49 and the like are provided. These elements are connected to a microcomputer 42 (see FIG. 5B) via lines (not shown) formed on the substrate 30 and the like. In the present embodiment, the acceleration sensor 37 is provided off the center line of the controller 5 along an X-axis direction. As a result, it is easier to calculate the motion of the controller 5 when the controller 5 is rotated around the Z-axis as the rotation center. Further, the acceleration sensor 37 is also located forward with respect to the center of the controller 5 along the longitudinal direction (the Z-axis direction) thereof. Furthermore, the provision of a wireless module 44 (FIG. 6) and the antenna 45 allows the controller 5 to act as a wireless controller.

As shown in FIG. 5B, at the front edge of the bottom main surface of the substrate 30, the imaging information calculation section 35 is provided. The imaging information calculation section 35 includes an infrared filter 38, a lens 39, an image pickup element 40 and an image processing circuit 41 located in order starting from the front surface of the controller 5. These elements 38 through 41 are attached to the bottom main surface of the substrate 30.

On the bottom main surface of the substrate 30, the microcomputer 42 and a vibrator 48 are provided. The vibrator 48 may be, for example, a vibration motor or a solenoid, and is connected to the microcomputer 42 via lines formed on the substrate 30 and the like. The controller 5 is vibrated by an actuation of the vibrator 48 based on an instruction from the microcomputer 42, and the vibration is conveyed to the player's hand holding the controller 5. Thus, a so-called vibration-responsive game can be realized. In the present embodiment, the vibrator 48 is located slightly forward with respect to the center of the housing 31. Since the vibrator 48 is provided closer to the front end than the center of the controller 5, the vibration of the vibrator 48 can vibrate the entire controller 5 significantly. The connector 33 is attached to the rear edge of the main bottom surface of the substrate 30. In addition to the elements shown in FIGS. 5A and 5B, the controller 5 includes a quartz oscillator for generating a reference clock of the microcomputer, an amplifier for outputting an audio signal to the speaker 49, and the like.

The shape of the controller 5, the shape of each of the operation buttons, and the number, the position or the like of the acceleration sensor and those of the vibrator shown in FIG. 3 through FIG. 5B are merely illustrative, and may be altered without departing from the scope of the present invention. In the present embodiment, a capturing direction of the imaging means is the Z-axis direction, but the capturing direction may be any direction. Specifically, the position of the imaging information calculation section 35 (the light incident surface 35a of the imaging information calculation section 35) in the controller 5 is not necessarily on the front surface of the housing 31, and may be on another surface so long as light can enter the housing 31 from the outside thereof.

FIG. 6 is a block diagram showing a structure of the controller 5. The controller 5 includes an operation section 32 (the operation buttons 32a through 32i), the connector 33, the imaging information calculation section 35, a communication section 36, and the acceleration sensor 37. The controller 5 transmits, as the operation data, data representing the particulars of the operation performed thereon to the game apparatus 3.

The operation section 32 includes the above-described operation buttons 32a through 32i, and outputs data representing an input state (whether or not each of the operation buttons 32a through 32i has been pressed) of each of the operation buttons 32a through 32i to the microcomputer 42 of the communication section 36.

The imaging information calculation section 35 is a system for analyzing image data of an image captured by the imaging means, determining an area having a high brightness in the image data, and calculating the center of gravity, the size, and the like of the area. The imaging information calculation section 35 has, for example, a maximum sampling period of about 200 frames/sec., and thus can trace and analyze even a relatively fast motion of the controller 5.

The imaging information calculation section 35 includes the infrared filter 38, the lens 39, the image pickup element 40, and the image processing circuit 41. The infrared filter 38 allows only infrared light, among light incident on the front surface of the controller 5, to pass therethrough. The lens 39 collects the infrared light which has passed through the infrared filter 38, and causes the infrared light to enter the image pickup element 40. The image pickup element 40 is a solid-state image pickup element such as a CMOS sensor or a CCD sensor. The image pickup element 40 receives the infrared light collected by the lens 39 and outputs an image signal. The markers 6R and 6L of the marker section 6 which are located in the vicinity of the display screen of the TV 2 each include an infrared LED for outputting infrared light forward from the TV 2. The provision of the infrared filter 38 allows the image pickup element 40 to receive only the infrared light which has passed through the infrared filter 38 and to generate image data. Thus, it is possible to capture the markers 6R and 6L more accurately. Hereinafter, an image captured by the image pickup element 40 will be referred to as a "captured image". The image data generated by the image pickup element 40 is processed by the image processing circuit 41. The image processing circuit 41 calculates positions, included in the captured image, of imaging targets (the markers 6R and 6L). The image processing circuit 41 outputs coordinates representing the calculated positions to the microcomputer 42 of the communication section 36. Data of the coordinates is transmitted to the game apparatus 3 from the microcomputer 42 as the operation data. Hereinafter, the above-described coordinates will be referred to as "marker coordinates". The marker coordinates change in accordance with the direction (orientation) and the position of the controller 5 per se, and therefore the game apparatus 3 can calculate the direction and the position of the controller 5 using the marker coordinates. Note that in another embodiment, the controller 5 may transmit data (e.g., data of the captured image) necessary for calculating the marker coordinates to the game apparatus 3, and then the game apparatus 3 may calculate the marker coordinates based on the transmitted data.

The acceleration sensor 37 detects an acceleration (including a gravitational acceleration) of the controller 5. That is, the acceleration sensor 37 detects a force (including the force of gravity) applied to the controller 5. The acceleration sensor 37 detects the value of the acceleration in a linear direction (a linear acceleration) along a sensing axis among the accelerations applied to a detection section of the acceleration sensor 37. For example, in the case of using a multi-axial (at least two-axial) acceleration sensor, a component of an acceleration along each axis is detected as an acceleration applied to the detection section of the acceleration sensor. For example, a three-axial or two-axial acceleration sensor may be available from Analog Devices, Inc. or STMicroelectronics N.V. Note that the acceleration sensor 37 is, for example, an acceleration sensor of an electrostatic capacitance type, but may be that of any other type.

In the present embodiment, the acceleration sensor 37 detects linear accelerations in three-axial directions, which are determined based on the controller 5 and include an upward/downward direction (a Y-axis direction shown in FIG. 3), a left/right direction (the X-axis direction shown in FIG. 3), and a front/rear direction (the Z-axis direction shown in FIG. 3). Since the acceleration sensor 37 detects an acceleration in the linear direction along each axis, the output from the acceleration sensor 37 represents the value of the linear acceleration along each of the three axes. That is, the detected accelerations are represented as a three-dimensional vector of an XYZ coordinate system which is set based on the controller 5. Hereinafter, a vector of which the components are the values of the accelerations in the three-axial directions which are detected by the acceleration sensor 37, will be referrer to as an "acceleration vector".

Data (acceleration data) representing the accelerations (the acceleration vector) detected by the acceleration sensor 37 is outputted to the communication section 36. In the present embodiment, the acceleration sensor 37 is used as a sensor for outputting data for calculating the motion of the controller 5. That is, the game apparatus 3 calculates the orientation and the motion of the controller 5 based on the acceleration data and data (marker coordinate data) representing the marker coordinates. Note that a method of calculating the orientation and the motion of the controller 5 will be described below.

Note that as those skilled in the art will readily understand from the description herein, a computer such as a processor (e.g., the CPU 10) of the game apparatus 3 or a processor (e.g., the microcomputer 42) of the controller may perform a process based on an acceleration signal outputted from the acceleration sensor 37, whereby it is possible to estimate or calculate (determine) additional information relating to the controller 5. For example, in a case where the computer performs a process on the assumption that the controller having the acceleration sensor is in a static state (that is, on the assumption that the acceleration detected by the acceleration sensor is limited to the gravitational acceleration), if in actuality the controller is in a static state, it is possible to determine, based on the detected acceleration, whether or not the controller is tilted in the direction of gravity and to determine to what degree the controller is tilted. Specifically, based on a state where a detection axis of the acceleration sensor is directed in a vertically downward direction, it is possible to determine, by only determining whether or not 1G (the gravitational acceleration) is applied to the acceleration sensor, whether or not the controller is tilted, and it is also possible to determine, by determining the magnitude of the gravitational acceleration, to what degree the controller is tilted. Further, in the case of using a multi-axial acceleration sensor, the computer may process the acceleration signal of each axis, whereby it is possible to determine in more detail to what degree the controller is tilted. In this case, the processor may calculate data of the tilt angle of the controller 5 based on the output from the acceleration sensor 37, or the processor may estimate an approximate degree of the tilt of the controller 5 based on the output from the acceleration sensor 37, without calculating the data of the tilt angle. Thus, the acceleration sensor 37 may be used in combination with a processor, whereby it is possible to determine the tilt, the orientation, and the position of the controller 5. On the other hand, in a case where the computer performs a process on the assumption that that the controller having the acceleration sensor 37 is in a dynamic state, since the acceleration obtained based on the motion of the acceleration sensor 37 is detected as well as a component of the gravitational acceleration, it is possible to determine a motion direction and the like of the controller 5 by removing the component of the gravitational acceleration through a predetermined process. Specifically, when the controller 5 having the acceleration sensor 37 is moved by being dynamically accelerated with the player's hand, it is possible to calculate various motions and/or positions of the controller 5 by processing the acceleration signals generated by the acceleration sensor 37. Note that even in a case where the computer performs a process on the assumption that that the controller having the acceleration sensor is in a dynamic state, it is possible to determine the tilt of the controller 5 in the direction of gravity, by removing the acceleration obtained based on the motion of the acceleration sensor through a predetermined process. In another embodiment, the acceleration sensor 37 may include an embedded signal processor or another type of dedicated processor for performing any desired process for the acceleration signalsoutputted from built-in acceleration detecting meansprior to outputting signals to the microcomputer 42. For example, when the acceleration sensor is intended to detect a static acceleration (e.g., the gravitational acceleration), the embedded signal processor or said another type of dedicated processor may convert a sensed acceleration signal into a corresponding tilt angle (or another preferable parameter).

Note that in the present embodiment, the acceleration sensor of an electrostatic capacitance type is used to calculate the orientation of the controller, but an acceleration sensor of any other type or a gyro-sensor may be used instead. Note, however, that an acceleration sensor is intended to detect an acceleration in the linear direction along each axis, whereas a gyro-sensor is intended to detect an angular velocity obtained based on a rotation. That is, when the gyro-sensor is used instead of the acceleration sensor, it is impossible to simply replace the acceleration sensor by the gyro-sensor, since the types of signals detected by both of the sensors are different from each other. In response, when the orientation is calculated using the gyro-sensor instead of the acceleration sensor, a significant change is required. Specifically, the value of the orientation is initialized at the start of detection. Then, data of an angular acceleration outputted from the gyro-sensor is integrated. Further, the amount of change in orientation is calculated based on the initialized value of the orientation, using the integration result. In this case, the calculated orientation is represented by an angle.

Note that as described above, when the orientation is calculated using the acceleration sensor, the acceleration vector is used to calculate the orientation. Therefore, the acceleration sensor and the gyro-sensor are different in that when the acceleration sensor is used, it is possible to represent the calculated orientation by a vector and also possible to calculate an absolute direction without performing an initialization. Further, as described above, the value of the calculated orientation is an angle when the gyro-sensor is used, while it is a vector when the acceleration sensor is used. Accordingly, when the gyro-sensor is used instead of the acceleration sensor, it is required to subject data of the orientation to predetermined conversion.

The communication section 36 includes the microcomputer 42, a memory 43, the wireless module 44, and the antenna 45. The microcomputer 42 controls the wireless module 44 for wirelessly transmitting data obtained by the microcomputer 42 to the game apparatus 3 while using the memory 43 as a storage area during the process.

Data outputted from the operation section 32, the imaging information calculation section 35, and the acceleration sensor 37 to the microcomputer 42 is temporarily stored in the memory 43. The data is transmitted as the operation data to the game apparatus 3. That is, at the time of performing transmission to the wireless controller module 19, the microcomputer 42 outputs the operation data stored in the memory 43 to the wireless module 44. The wireless module 44 modulates a carrier wave of a predetermined frequency by the operation data and radiates the resultant weak radio signal from the antenna 45, using, for example, the Bluetooth (registered trademark) technology. That is, the operation data is modulated into a weak radio signal by the wireless module 44 and transmitted from the controller 5. The weak radio signal is received by the wireless controller module 19 on a game apparatus 3 side. The received weak radio signal is demodulated or decoded so that the game apparatus 3 can obtain the operation data. The CPU 10 of the game apparatus 3 executes the game processing based on the obtained operation data and the game program. Note that the wireless communication from the communication section 36 to the wireless controller module 19 is performed in a predetermined cycle. Since game processing is generally executed in a cycle of 1/60 sec. (as one frame time), it is preferable that the wireless transmission is performed in a shorter cycle time than this cycle. The communication section 36 of the controller 5 outputs the operation data to the wireless controller module 19 of the game apparatus 3, for example, once in 1/200 sec.

By using the controller 5, the player can perform an operation of pointing at an arbitrary position on the display screen by the controller 5 and an operation of moving the controller 5 per se, in addition to a conventional general game operation of pressing the operation buttons.

(Overview of the Game Operation and the Game Processing)

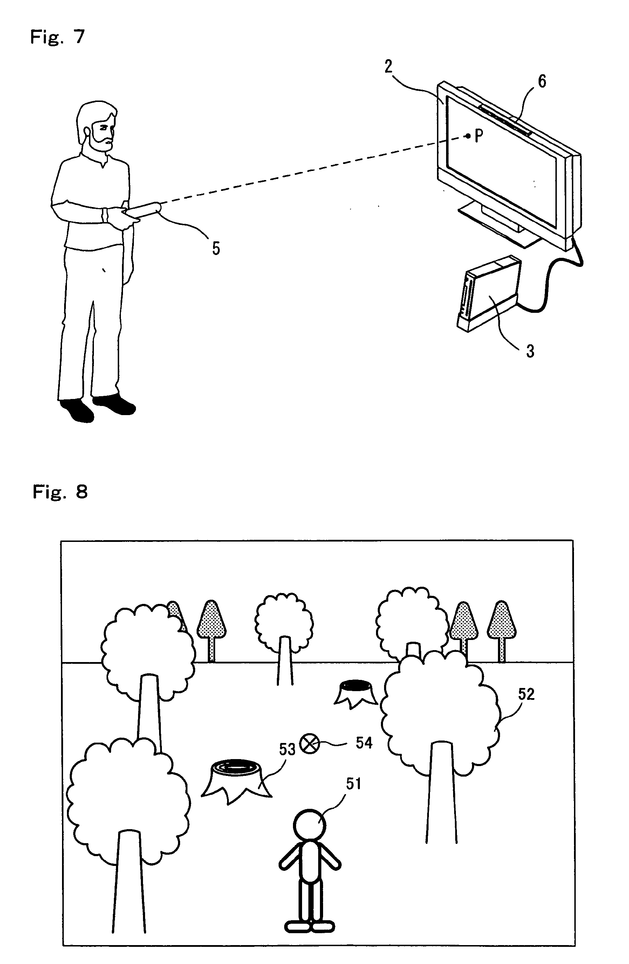

With reference to FIG. 7, an example of the game operation will be described. FIG. 7 is a schematic diagram showing a state where the game operation is performed using the controller 5. In the present embodiment, as shown in FIG. 7, the player performs the game operation of pointing, by the controller 5, at a position P provided on the display screen of the TV 2. The position P, which is a position provided on the display screen and pointed at by the controller 5, is ideally a position at which a straight line extending from the front end portion of the controller 5 along the above-described longitudinal direction intersects with the display screen of the TV 2. Note, however, that the position P may not necessarily be exactly the above-described position, and it is sufficient that positions surrounding the position P can only be calculated by the game apparatus 3. Hereinafter, the position provided on the display screen and pointed at by the controller 5 will be referred to as a "pointing position". The player performs the game operation by moving the pointing position provided on the display screen.

FIG. 8 is a diagram showing an example of the game image displayed on the display screen of the TV 2 in the present embodiment. As shown in FIG. 8, on the display screen of the TV 2, a player character 51, obstacles (e.g. , a tree 52 and a stump 53), a pointing icon 54, and the like are displayed.

In a game, the player character 51 automatically moves in a game space toward the far side of the game space without an instruction from the player. In this game, the obj ect of the player is to control the player character 51 to move in the game space, preventing the player character 51 from hitting the obstacles such as trees and stumps.

The player character 51 is capable of moving in a left/right direction on the display screen and of performing a jump. Therefore, the player character 51 is capable of avoiding the obstacles by moving in the left/right direction on the display screen and also by performing a jump in the case of a low obstacle such as a stump (i.e., jumping the stump).

The player character 51 moves in the left/right direction by an operation of changing the direction of the controller 5, i. e. , by an operation of moving the pointing position on the display screen. In the present embodiment, the player character 51 is moved so as to be positioned at the same position as the pointing position, with respect to the left/right direction provided on the display screen. Therefore, basically, the player performs the game operation by holding the controller 5 pointing to the display screen. Note that since in the present embodiment, the pointing icon 54 is displayed at the pointing position, the player can easily recognize, by viewing the pointing icon 54, the point at which the controller 5 is currently pointing.

On the other hand, the player character 51 performs a j ump by an operation (hereinafter referred to as a "jump operation") of moving the controller 5 in an upward direction. In the present embodiment, the operation of moving the controller 5 in the upward direction may only be an operation of moving the front end of the controller 5 in the upward direction (the opposite direction of the direction of gravity). That is, the operation may be an operation of moving the controller 5, remaining parallel to the ground, in the upward direction, or may be an operation of changing, in the upward direction (pointing the controller 5 upward), the direction in which the controller 5 is pointing. In the present embodiment, based on the marker coordinate data and the acceleration data, a determination (a sensing of the movement, in the upward direction, of the controller 5) is made whether or not the jump operation has been performed. A method of determining whether or not the jump operation has been performed will be described in detail below.

(Details of the Game Processing)

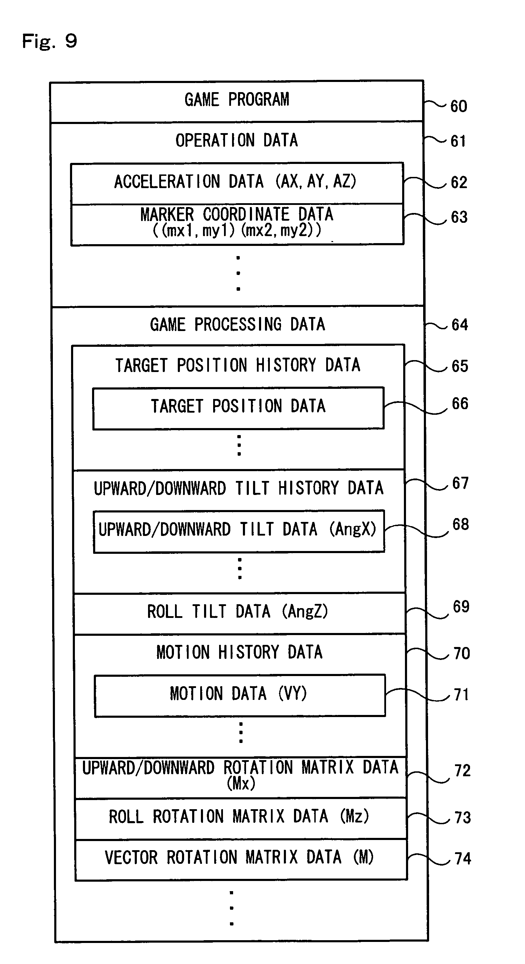

Hereinafter, with reference to FIGS. 9 through 15, the game processing executed by the game apparatus 3 will be described in detail. First, with reference to FIG. 9, main data used for the game processing will be described. FIG. 9 is a diagram showing the main data stored in a main memory (the external main memory 12 or the internal main memory 11e) of the game apparatus 3. As shown in FIG. 9, the main memory has stored therein a game program 60, operation data 61, game processing data 64, and the like. Note that as well as the data shown in FIG. 9, the main memory also has stored therein data necessary for the game processing, such as image data of objects appearing in the game and data representing parameters of the objects.

All or a portion of the game program 60 is read from the optical disc 4 at appropriate timing given after the game apparatus 3 is turned on, and then the read game program 60 is stored into the main memory. The game program 60 includes a program necessary for performing a process of calculating the orientation of the controller 5 and of determining the motion of the controller 5 based on the calculated orientation.

The operation data 61 is the operation data transmitted from the controller 5 to the game apparatus 3. The operation data 61 includes acceleration data 62 and marker coordinate data 63. Note that although not shown in the figures, the operation data 61 may include operation button data. The operation button data is data representing the particulars of the operation (whether or not each of the operation buttons 32a through 32i has been pressed) performed on each of the operation buttons 32a through 32i of the operation section 32. Note that as described above, since the controller 5 transmits the operation data to the game apparatus 3 once in 1/200 sec. , the operation data stored in the main memory is updated as often. Further, the main memory has stored therein only the most recent (last obtained) operation data.

The acceleration data 62 is data representing the accelerations (the acceleration vector) detected by the acceleration sensor 37. Here, the acceleration data 62 is data representing an acceleration vector A=(AX, AY, AZ) with respect to the three-axial (an X-axis, a Y-axis, and a Z-axis) directions shown in FIG. 3.

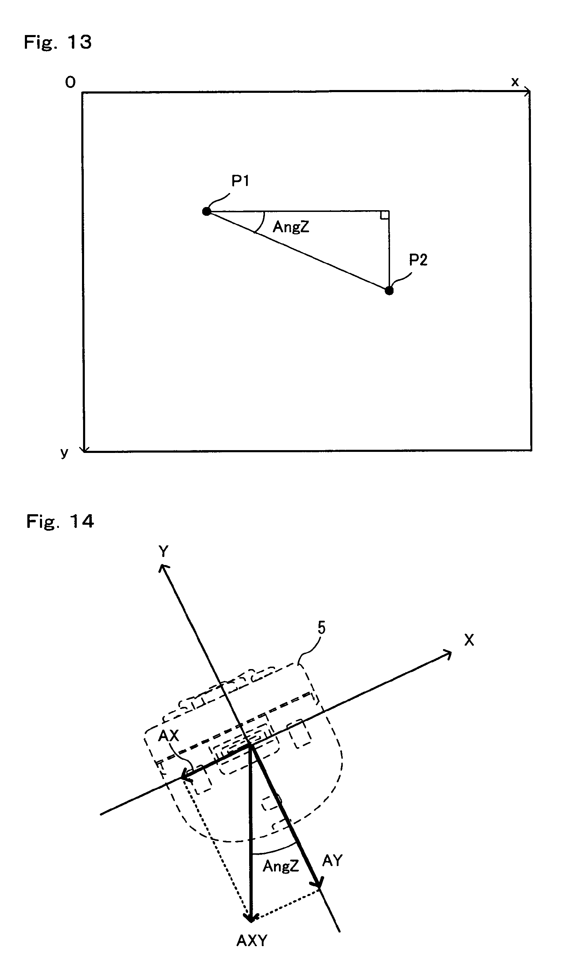

The marker coordinate data 63 is data representing coordinates calculated by the image processing circuit 41 of the imaging information calculation section 35, that is, data representing the marker coordinates. The marker coordinates are represented by a coordinate system (an xy coordinate system shown in FIG. 13) for representing a two-dimensional position corresponding to the captured image. Note that when the image pickup element 40 captures the two markers 6R and 6L, two sets of the marker coordinates ((x1, y1) and (x2, y2)) are calculated. On the other hand, when one of the markers 6R and 6L is positioned outside the range capable of being captured by the image pickup element 40, only the other one is captured by the image pickup element 40 and only the corresponding one set of the marker coordinates are calculated. Further, when both the markers 6R and 6L are positioned outside the range capable of being captured by the image pickup element 40, the markers are not captured by the image pickup element 40 and the marker coordinates are not calculated. Consequently, the marker coordinate data may represent two sets of the marker coordinates, may represent one set of the marker coordinates, or may represent a state where the marker coordinates are not present.

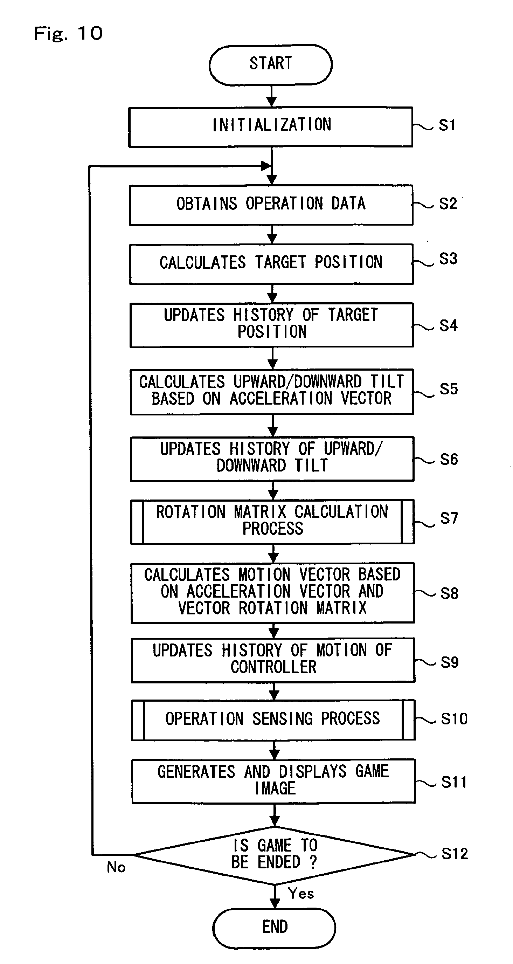

The game processing data 64 is data used for the below-described game processing (FIG. 10). The game processing data 64 includes target position history data 65, upward/downward tilt history data 67, roll tilt data 69, motion history data 70, upward/downward rotation matrix data 72, roll rotation matrix data 73, vector rotation matrix data 74, and the like.

The target position history data 65 is data representing the history of a target position and includes a plurality of pieces of target position data 66. The "target position" as used herein refers to a position which is related to images of the imaging targets (the markers 6R and 6L) and which is provided in the captured image, and the target position data 66 is data representing the target position. Specifically, the target position is the midpoint of two sets of the marker coordinates. The target position history data 65 is updated, including a predetermined number of (at least two) pieces of the target position data 66 in reverse chronological order, each time the target position data 66 is generated. That is, the target position history data 65 represents the history of the target position obtained within a predetermined time period from past to present.

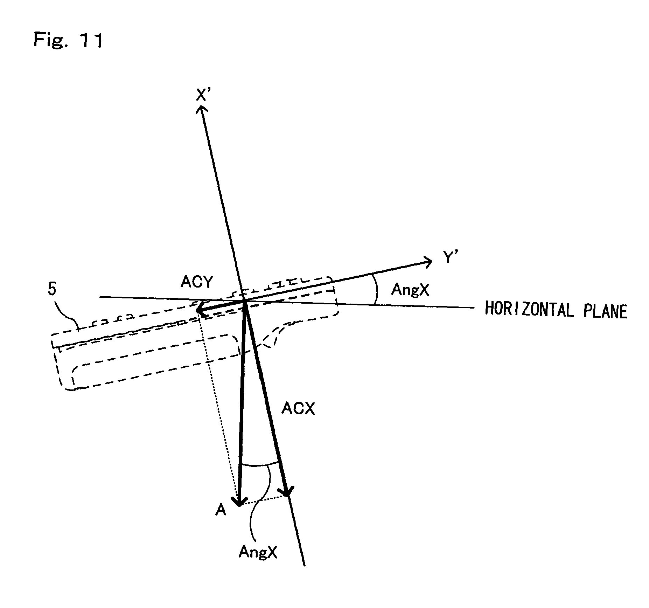

The upward/downward tilt history data 67 is data representing the history of an upward/downward tilt of the controller 5 and includes a plurality of pieces of upward/downward tilt data 68 representing the upward/downward tilt of the controller 5. The "upward/downward tilt of the controller 5" as used herein refers to the tilt related to the rotation around the X-axis, that is, the tilt of the controller 5 which is related to a horizontal plane (a plane orthogonal to the direction of gravity). In the present embodiment, the upward/downward tilt of the controller 5 is represented by the angle (AngX) formed by the Z-axis of the XYZ coordinate system which is set based on the controller 5 and the horizontal plane (see FIG. 11). The upward/downward tilt history data 67 is updated, including a predetermined number of (at least two) pieces of the upward/downward tilt data 68 in reverse chronological order, each time the upward/downward tilt data 68 is generated. That is, the upward/downward tilt history data 67 represents the history of the upward/downward tilt obtained within a predetermined time period from past to present.

The roll tilt data 69 is data representing a roll-direction tilt of the controller 5. The "roll-direction tilt of the controller 5" as used herein refers to a tilt related to the rotation around the Z-axis of the XYZ coordinate system which is set based on the controller 5. In the present embodiment, the roll-direction tilt of the controller 5 is represented by the angle (AngZ) formed by a predetermined plane including the Z-axis of the XYZ coordinate system which is set based on the controller 5 and the X-axis of the same XYZ coordinate system.

The motion history data 70 is data representing the history of the motion of the controller 5 and includes a plurality of pieces of motion data 71 representing the motion of the controller 5. In the present embodiment, the motion data 71 represents a Y-axis component (VY) of a vector (V=(VX, VY, VZ)) representing the motion related to each axis of the XYZ coordinate system. The motion history data 70 is updated, including a predetermined number of pieces of the motion data 71 in reverse chronological order, each time the motion data 71 is generated. That is, the motion history data 70 represents the history of the motion of the controller 5 which is related to the Y-axis direction and which is obtained within a predetermined time period frompast to present.

The upward/downward rotation matrix data 72 is data representing an upward/downward rotation matrix (Mx). The upward/downward rotation matrix is a matrix for rotating the acceleration vector around the X-axis. Further, the roll rotation matrix data 73 is data representing a roll rotation matrix (Mz). The roll rotation matrix is a matrix for rotating the acceleration vector around the Z-axis (a roll axis). Furthermore, the vector rotation matrix data 74 is data representing a vector rotation matrix (M). The vector rotation matrix is a matrix for rotating the acceleration vector around the X-axis and the Z-axis, and is calculated based on the upward/downward rotation matrix Mx and the roll rotation matrix Mz.

Note that as well as the above-described data, the game processing data 64 also includes data representing the value of the below-described timer, data representing the below-described swing flag, data representing the position, provided in the game space, of the player character, and the like.

Next, with reference to FIGS. 10 through 15, a process performed by the game apparatus 3 will be described in detail. FIG. 10 is a main flow chart showing the flow of the process performed by the game apparatus 3. When the game apparatus 3 is turned on and the optical disc 4 having stored therein the game program is mounted into the game apparatus 3, the CPU 10 of the game apparatus 3 executes the startup program stored in the boot ROM not shown in the figures, whereby each unit such as the main memory is initialized. Then, the game program stored in the optical disc 4 is read by the main memory and starts to be executed by the CPU 10. The flow chart shown in FIG. 10 is a flow chart showing the process performed after the above-described process is completed.

In step S1 of FIG. 10, the CPU 10 first performs an initialization. In the initialization, a swing flag is set as "Off". The swing flag is a flag used to determine whether or not the jump operation has been performed on the controller 5. Further, in the initialization, no data is included in any of the target position history data 65, the upward/downward tilt history data 67, or the motion history data 70. After step S1, a process loop of steps S2 through S12 is repeatedly performed during the game. Note that one process loop is performed once in one frame time (e.g., 1/60 sec.).

In step S2, the CPU 10 obtains the operation data. That is, since the operation data transmitted from the controller 5 is received via the wireless controller module 19 and is stored into the main memory, the CPU 10 reads the operation data from the main memory.

In step S3, the CPU 10 calculates the target position. The target position is calculated based on the marker coordinates represented by the marker coordinate data 63 stored in the main memory. The target position is calculated as, for example, the position of the midpoint of two sets of the marker coordinates, but may be any position capable of being uniquely determined based on two sets of the marker coordinates. Data representing the calculated target position is stored as the target position data 66 into the main memory. Note that when the imaging targets (the markers 6R and 6L) have not been detected by the image pickup element 40, it may be impossible to detect the target position in step S3. In this case, the CPU 10 may skip step S3 and the below-described step S4.

When the target position has been calculated in step S3, the CPU 10 updates the history of the target position in step S4. Specifically, the oldest data among the predetermined number of pieces of the target position data 66 included in the target position history data 65 stored in the main memory is deleted. Then, the data representing the target position calculated in step S3 is added as the new target position data 66 to the target position history data 65. Note that in the early stage of the process loop of steps S2 through S12, when the number of pieces of the target position data 66 included in the target position history data 65 is less than the predetermined number, none of the target position data 66 is deleted.

In step S5, the CPU 10 calculates the upward/downward tilt of the controller 5 based on the acceleration vector represented by the acceleration data 62 stored in the main memory. Here, the upward/downward tilt is calculated as the angle formed by the Z-axis and the horizontal plane. FIG. 11 is a diagram illustrating a method of calculating the upward/downward tilt of the controller 5. First, as shown in FIG. 11, a two-dimensional X'Y' coordinate system which is set on a plane (a vertical plane) parallel to the direction of gravity is defined. A Y'-axis is set in the same direction as the Z-axis direction, and therefore a positive Z-axis direction is set as a positive Y'-axis direction. An X'-axis is an axis orthogonal to the Y'-axis, and therefore a direction of the X'-axis which is closer to the direction of gravity is set as a negative X'-axis direction.

When calculating the upward/downward tilt of the controller 5, the CPU 10 first decomposes the acceleration vector A into an X'-axis direction component ACX and a Y'-axis direction component ACY (see FIG. 11). That is, the CPU 10 decomposes the acceleration vector A into a Z-axis component and another component, and calculates the magnitude of each of the Z-axis component and said another component. Accordingly, the Y'-axis direction component ACY is the magnitude (AZ) of the Z-axis component of the acceleration vector A. Further, the X'-axis direction component ACX is calculated as the magnitude of the (two-dimensional) resultant vector of an X-axis component (AX) and a Y-axis component (AY) of the acceleration vector A.

Next, the CPU 10 calculates, from the X'-axis direction component ACX and the Y'-axis direction component ACY, the angle AngX representing the upward/downward tilt. The angle AngX is calculated as the angle formed by the acceleration vector A and the resultant vector ACX. Specifically, the angle AngX is calculated in accordance with the following equation (1).

$$\text{AngX}=-\text{atan}(\text{ACY}/\text{ACX}) \quad ...(1)$$

Note that in equation (1), -90°≤AngX≤90°. In equation (1) : AngX=0 when the front end portion of the controller 5 is directed in the horizontal direction; AngX=90 when the front end portion of the controller 5 is directed in a vertically upward direction; and AngX=-90 when the front end portion of the controller 5 is directed in the vertically downward direction.

Based on the above-described method, it is possible to calculate the angle formed by the acceleration vector A and the Z-axis, by calculating the X'-axis direction component ACX as the magnitude of the resultant vector of the X-axis component AX and the Y-axis component AY of the acceleration vector A. Consequently, it is possible to accurately calculate the upward/downward tilt of the controller 5. In another embodiment, when it is assumed, for example, that the controller 5 is unlikely to be tilted around the Z-axis (the roll axis) and is likely to be used with the top surface side up, the X'-axis direction component ACX may be calculated as the magnitude of the Y-axis component AY of the acceleration vector A.

When the upward/downward tilt of the controller 5 has been calculated, the CPU 10 updates the history of the upward/downward tilt in step S6. Specifically, the oldest data among the predetermined number of pieces of the upward/downward tilt data 68 included in the upward/downward tilt history data 67 stored in the main memory is deleted. Then, data representing the angle AngX calculated in step S5 is added as the new upward/downward tilt data 68 to the upward/downward tilt history data 67. Note that in the early stage of the process loop of steps S2 through S12, when the number of pieces of the upward/downward tilt data 68 included in the upward/downward tilt history data 67 is less than the predetermined number, none of the upward/downward tilt data 68 is deleted.

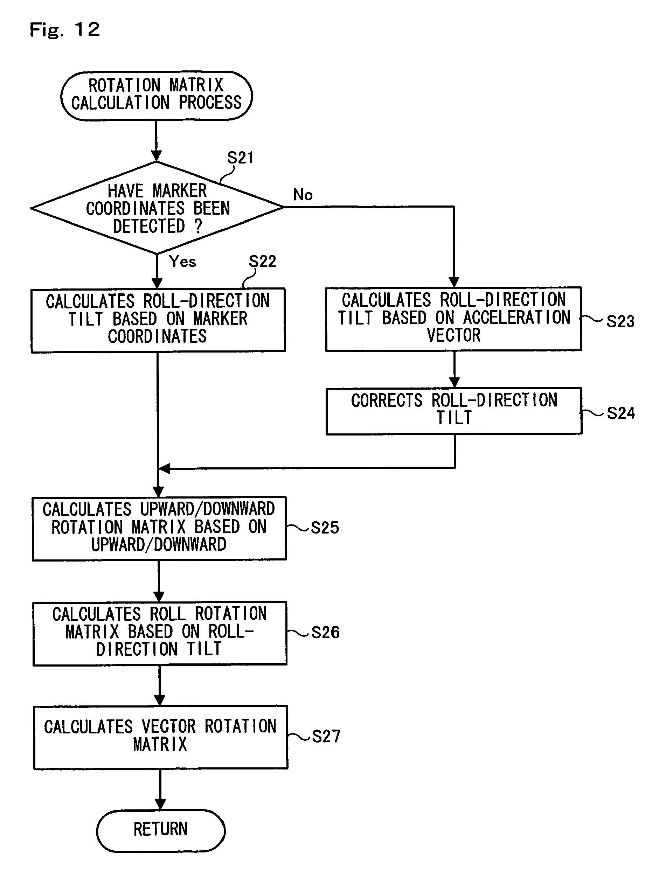

In step S7, the CPU 10 performs a rotation matrix calculation process. The rotation matrix calculation process is a process for calculating the orientation of the controller 5 and for calculating the vector rotation matrix based on the calculated orientation. With reference to FIG. 12, the rotation matrix calculation process will be described in detail below.

FIG. 12 is a flow chart showing the flow of the rotation matrix calculation process (step S7) shown in FIG. 10. In the rotation matrix calculation process, the CPU 10 first determines in step S21 whether or not it is possible to calculate the roll-direction tilt using the marker coordinates. The determination is made based on the state of the markers being captured. Specifically, the determination is made based on whether or not the imaging targets (the markers 6R and 6L) have been detected by the image pickup element 40. The determination of step S21 is made with reference to the marker coordinate data 63 stored in the main memory. That is, when the marker coordinate data 63 represents two sets of the marker coordinates, it is determined that the markers 6R and 6L have been detected. On the other hand, when the marker coordinate data 63 represents one set of the marker coordinates or represents a state where the marker coordinates are not present, it is determined that the markers 6R and 6L have not been detected. When the determination result of step S21 is affirmative, step S22 is performed. On the other hand, when the determination result of step S21 is negative, the below-described step S23 is performed.

Note that the determination process of step S21 is a process for determining whether or not the markers necessary for calculating the roll-direction tilt have been detected (i.e., whether or not it is possible to calculate the roll-directiontilt). In the present embodiment, it is determined that it is possible to calculate the roll-direction tilt only when two sets of the marker coordinates have been detected. In another embodiment, however, it may be possible to calculate the roll-direction tilt using only one set of the marker coordinates. For example, when two sets of the marker coordinates have been detected at timings given before and after a certain timing, even if only one set of the marker coordinates have been detected (or even if the marker coordinates have not been detected) at the certain timing, it is also possible to calculate two sets of the marker coordinates by interpolation and then to calculate the roll-direction tilt. Accordingly, in said another embodiment, when the target position is calculated using one set of the marker coordinates, the determination result of step S21 may be affirmative even when only one set of the marker coordinates have been detected.

In step S22, the CPU 10 calculates the roll-direction tilt based on the marker coordinates represented by the marker coordinate data 63. FIG. 13 is a diagram illustrating a method of calculating the roll-direction tilt based on the marker coordinates. FIG. 13 shows the captured image captured by the imaging means of the controller 5, and a position P1 and a position P2 include images of the markers. Here, the marker coordinates of the position P1 are $(x1, y1)$ and the marker coordinates of the position P2 are $(x2, y2)$.

It is possible to calculate the roll-direction tilt based on the tilt which is related to images (marker images) of the imaging targets and which is obtained in the captured image. Here, the roll-direction tilt is calculated as the angle (AngZ) formed by a vector connecting the two sets of the marker coordinates to each other and an x-axis. Specifically, the CPU 10 first calculates the roll-direction tilt AngZ in accordance with the following equation (2).

$$\text{AngZ=AngZ' when x2-x1}\geq0$$

$$\text{AngZ=-180+AngZ' when x2-x1<0 and AngZ>0}$$

$$\text{AngZ=180+AngZ' when x2-x1<0 and AngZ}\leq0$$

$$\text{Provided that AngZ'=atan((y2-y1)/(x2-x1))}$$

$$...(2)$$

In equation (2), of the two marker coordinates calculated based on the captured image captured when the controller 5 is in a reference state (a state where a negative Y-axis direction is directed in the direction of gravity), the coordinates of which the x-coordinate value is smaller are $(x1, y1)$. Note that since a variable AngZ' of equation (2) is represented by $-90°\leq\text{AngZ}\leq90°$, it is impossible to represent, by the variable AngZ', whether the controller 5 is in the reference state or in a reverse state (a state where a positive Y-axis direction is directed in the direction of gravity) to the reference state.

In response, in equation (2), when (x2-x1) is a negative value, AngZ is obtained by correcting the value of the variable AngZ'. Consequently, since AngZ is represented by $-180 \leq AngZ \leq 180$, it is possible to calculate the roll-direction tilt in the range of 360°. Note that in another embodiment, when it is assumed that the controller 5 is unlikely to be used with the bottom surface side up, the variable AngZ' of equation (2) may be used unchanged as the roll-direction tilt.

Data representing the roll-direction tilt AngZ calculated as described above is stored as the roll tilt data 69 into the main memory. After step S22, step S25 is performed.

On the other hand, in step S23, the CPU 10 calculates the roll-direction tilt based on the acceleration vector represented by the acceleration data 62. FIG. 14 is a diagram illustrating a method of calculating the roll-direction tilt based on the acceleration vector. FIG. 14 shows the controller 5 as viewed from a negative Z-axis direction. As shown in FIG. 14, it is possible to represent the roll-direction tilt as the angle formed by a resultant vector AXY of the X-axis component and the Y-axis component of the acceleration vector A, and the Y-axis. Note that the roll-direction tilt calculated based on the acceleration vector is the angle formed by the resultant vector AXY and the Y-axis, and therefore represents the same angle as that of the roll-direction tilt calculated based on the marker coordinates. Specifically, it is possible to calculate the roll-direction tilt AngZ, based on the X-axis component AX and the Y-axis component AY of the acceleration vector A and in accordance with the following equation (3).

$$AngZ=AngZ' \quad when \quad AY \geq 0$$

$$AngZ=-180+AngZ' \quad when \quad AY<0 \quad and \quad AngZ>0$$

$$AngZ=180+AngZ' \quad when \quad AY<0 \quad and \quad AngZ \leq 0$$

$$Provided \quad that \quad AngZ'=atan(AX/AY)$$

$$...(3)$$

In equation (3), the value of AngZ' is corrected when AY<0 so as to represent the tilt AngZ in the range of $-180 \leq AngZ \leq 180$, in order to represent, as in step S22, whether the controller 5 is in the reference state or in the reverse state. Data representing the roll-direction tilt AngZ calculated as described above is stored as the roll tilt data 69 into the main memory.

In step S24, the CPU 10 corrects the roll-direction tilt calculated in step S23. The corrected tilt is calculated by bringing the roll-direction tilt calculated in the previous process loop of steps S2 through S12, close at a predetermined rate to the roll-direction tilt calculated in step S24 of the current process loop. Here, the roll-direction tilt calculated in the previous process loop is: the tilt calculated in step S22 when the determination result of step S21 is affirmative in the previous process loop; or the tilt calculated in step S24 when the determination result of step S21 is negative in the previous process loop. Specifically, when the roll-direction tilt calculated in the previous process loop is AngZ" and the roll-direction tilt calculated in step S24 of the current process loop is AngZ', the corrected roll-direction tilt AngZ is calculated in accordance with the following equation (4).

$$AngZ=AngZ"+(AngZ'-AngZ") \times k \quad ...(4)$$

In equation (4), a constant k is determined in the range of 0<k<1 in advance.

For example, when the marker coordinates, which have previously been detected, are not currently detected, the roll-direction tilt is calculated in step S22 of some process loop and then is calculated in step S23 of the next process loop. In this case, since the roll-direction tilt is calculated based on data different between the above loops, the value of the calculated roll-direction tilt may be significantly different therebetween. In the present embodiment, due to step S24, it is possible to prevent the roll-direction tilt from drastically changing even when the roll-direction tilt is significantly different between the previous process loop and the current process loop.

Further, since the acceleration vector drastically changes when the controller 5 is being moved, it is likely that the acceleration vector is not accurately representing the orientation of the controller 5. Accordingly, it is also likely that the roll-direction tilt calculated based on the acceleration vector in this case is inaccurate. In response, in the present embodiment, due to step S24, it is possible to prevent the roll-direction tilt from drastically changing even when the acceleration vector drastically changes. Thus, it is possible to reduce the drastic change of the acceleration vector and to prevent the value of the roll-direction tilt from being inaccurate when the controller 5 is being moved.

The data representing the roll-direction tilt corrected by the above step S24 is stored as the roll tilt data 69 into the main memory. After step S24, step S25 is performed.

As described above, the upward/downward tilt of the controller 5 is calculated in step S5, and the roll-direction tilt of the controller 5 is calculated in step S22 or in steps S23 and S24. Accordingly, the upward/downward tilt and the roll-direction tilt of the controller 5 are calculated, whereby the orientation (related to the upward/downward direction and the roll direction) of the controller 5 is also calculated. In the present embodiment, since the roll-direction tilt is calculated based on the marker coordinates (when the marker coordinates are detected) as described above, it is possible to calculate the roll-direction tilt more accurately than to calculate the roll-direction tilt using the acceleration vector. As a result, it is possible to accurately calculate the orientation of the controller 5. Note that in the following steps S25 through S27, based on the orientation (i.e., the upward/downward tilt and the roll-direction tilt) of the controller 5, the vector rotation matrix is calculated.

In step S25, the CPU 10 calculates the upward/downward rotation matrix based on the upward/downward tilt of the controller 5. Note that the upward/downward tilt is represented by the most recent upward/downward tilt data 68 stored in the main memory. Specifically, the upward/downward rotation matrix Mx is calculated in accordance with the following equation (5).

$$Mx = \begin{bmatrix} 1 & 0 & 0 \\ 0 & cos(AngX) & sin(AngX) \\ 0 & -sin(AngX) & cos(AngX) \end{bmatrix} \quad \cdots \quad (5)$$

As shown in equation (5), the upward/downward rotation matrix Mx is a rotation matrix for rotating the three-dimensional vector around the X-axis by the angle AngX. Data representing the upward/downward rotation matrix Mx calculated in step S25 is stored as the upward/downward rotationmatrix data 72 into themainmemory.

In step S26, the CPU 10 calculates the roll rotation matrix based on the roll-direction tilt of the controller 5. Note that the roll-direction tilt is represented by the roll tilt data 69 stored in the main memory. Specifically, the roll rotation matrix Mz is calculated in accordance with the following equation (6).

$$Mz = \begin{bmatrix} cos(AngZ) & sin(AngZ) & 0 \\ -sin(AngZ) & cos(AngZ) & 0 \\ 0 & 0 & 1 \end{bmatrix} \quad \cdots \quad (6)$$

As shown in equation (6), the roll rotation matrix Mz is a rotation matrix for rotating the three-dimensional vector around the Z-axis by the angle AngZ. Data representing the roll rotation matrix Mz calculated in step S26 is stored as the roll rotation matrix data 73 into the main memory.

In step S27, the CPU 10 calculates the vector rotation matrix based on the upward/downward rotation matrix and the roll rotation matrix. The vector rotation matrix M is calculated by multiplying the inverse matrix of the upward/downward rotation matrix by the inverse matrix of the roll rotation matrix. Specifically, the CPU 10 calculates the vector rotation matrix M using the upward/downward rotation matrix data 72 and the roll rotation matrix data 73, which are stored in the main memory, in accordance with the following equation (7).

$$M = Mx^{-1} \cdot Mz^{-1} \quad \ldots (7)$$

Note that in equation (7), the inverse matrix $Mx^{-1}$ of the upward/downward rotation matrix Mx may be obtained by setting AngX of the upward/downward rotation matrix Mx as "-AngX". Similarly, the inverse matrix $Mz^{-1}$ of the roll rotation matrix Mz may be obtained by setting AngZ of the roll rotation matrix Mz as "-AngZ". As can be seen from equation (7), the vector rotation matrix M is a rotation matrix for rotating the three-dimensional vector around the X-axis by the angle "-AngX" and also around the Z-axis by the angle "-AngX". Data representing the vector rotation matrix M calculated in step S27 is stored as the vector rotation matrix data 74 into the main memory. After step S27, the CPU 10 ends the rotation matrix calculation process.

Referring back to FIG. 10, in step S8, the CPU 10 calculates a motion vector representing the motion of the controller 5. A motion vector V is calculated based on the acceleration vector A represented by the acceleration data 62 stored in the main memory and the vector rotation matrix M represented by the vector rotation matrix data 74 stored in the main memory. Specifically, the motion vector V=(VX, VY, VZ) is calculated in accordance with the following equation (8).

$$[VX \; VY \; VZ] = [AX \; AY \; AZ]M \quad ...(8)$$

As shown in equation (8), the motion vector V is obtained by rotating the acceleration vector A using the vector rotation matrix M.

Here, the acceleration vector detected by the acceleration sensor includes a component resulting from the gravitational acceleration and a component resulting from the motion of the controller 5. In the present embodiment, as shown in step S8, the direction of the acceleration vector detected by the acceleration sensor is changed (rotated) using the vector rotation matrix corresponding to the orientation of the controller 5. Consequently, it is possible to remove from the acceleration vector the component resulting from the gravitational acceleration, and to change the direction of the acceleration vector to a direction corresponding to the motion of the controller 5. That is, a Y-axis component VY of the motion vector represents the motion in the direction of gravity (the vertical direction). Further, an X-axis component VX of the motion vector represents, when the negative Y-axis direction of the XYZ coordinate system which is set based on the controller 5 is the direction of gravity, the motion obtained in the X-axis direction of the XYZ coordinate system. A Z-axis component VZ of the motion vector represents, when the negative Y-axis direction of the XYZ coordinate system which is set based on the controller 5 is the direction of gravity, the motion obtained in the Z-axis direction of the XYZ coordinate system. As described above, it is possible to accurately determine the motion of the controller 5 by the motion vector obtained in step S8.

In the present embodiment, the Y-axis component (VY) of the motion vector V is used to determine the motion of the controller 5 which is provided in the vertical direction. Note that when the controller 5 is at rest with respect to the vertical direction, VY=G (G is the magnitude of the gravitational acceleration). Further, when the controller 5 is moved in the upward direction, the value of VY is smaller than that of G. When the controller 5 is moved in the downward direction, the value of VY is greater than that of G. Note that since in the present embodiment, the positive Y-axis direction is the vertically upward direction, the value of G is a negative value.

Note that in step S8, the CPU 10 may subtract from the calculated motion vector the motion vector (0, G, 0) of a resting state. That is, the value of (VY-G) may be stored as the motion data 71 in the main memory. As a result, it is possible to represent, as 0, the value of the Y-axis component of the motion vector obtained when the controller 5 is at rest.

In step S9, the CPU 10 updates the history of the motion of the controller 5. Specifically, the oldest data among the predetermined number of pieces of the motion data 71 included in the motion history data 70 stored in the main memory is deleted. Then, data representing the Y-axis component VY of the motion vector V calculated in step S7 is added as the new motion data 71 to the motion history data 70. Note that in the early stage of the process loop of steps S2 through S12, when the number of pieces of the motion data 71 included in the motion history data 70 is less than the predetermined number, none of the motion data 71 is deleted.

Note that in the present embodiment, the vector rotation matrix is calculated in each process loop of steps S2 through S12. Here, in another embodiment, the vector rotation matrix may be calculated only when the acceleration vector satisfies a predetermined condition. Specifically, steps S5 through S7 may be performed only when the determination result of determining whether or not the acceleration vector satisfies the predetermined condition is affirmative.

Note that the predetermined condition may include, for example, a condition (a first condition) where the magnitude of the difference vector of the most recent acceleration vector and the acceleration vector obtained in a predetermined-number-earlier process loop is less than a predetermined value, and a condition (a second condition) where the magnitude of the most recent acceleration vector is close to that of the gravitational acceleration (i.e., the difference of these magnitudes is less than a predetermined value). The CPU 10 may calculate the vector rotation matrix and the motion vector only when the first condition is satisfied, may calculate the vector rotation matrix and the motion vector only when the second condition is satisfied, or may calculate the vector rotation matrix and the motion vector only when both (or either one of) the first condition and the second condition are (is) satisfied. The first condition and the second condition are conditions for determining whether or not the acceleration vector corresponds to the orientation of the controller 5. When the magnitude of the difference vector is large or when the magnitude of the acceleration vector is significantly different from that of the gravitational acceleration, it is contemplated that the controller 5 is being violently moved. In this case, since the acceleration vector includes the component resulting from the motion of the controller 5 as well as the component resulting from the gravitational acceleration, it may be impossible to accurately calculate the (upward/downward or roll-direction) tilt of the controller 5 based on the acceleration vector. Accordingly, when the predetermined condition is not satisfied, the vector rotation matrix is not to be calculated, due to the determination that it may be impossible to accurately calculate the tilt of the controller 5. Consequently, the vector rotation matrix is calculated only when it is possible to accurately calculate the orientation of the controller 5 based on the acceleration vector. Thus, it is possible to accurately calculate the vector rotation matrix. Note that when the vector rotation matrix is, as described above, calculated only when the acceleration vector satisfies the predetermined condition, if it is determined that the acceleration vector does not satisfy the predetermined condition in a process loop, step S8 is performed using the most recent vector rotation matrix calculated in the earlier process loops.

Further, in another embodiment, the vector rotation matrix may be calculated using the acceleration vectors obtained in a predetermined number of earlier frames. That is, the CPU 10 has stored in the main memory the history of the acceleration vector obtained in the predetermined number of earlier frames and selects, from the stored acceleration vectors, acceleration vectors satisfying the first condition and/or the second condition. Then, the CPU 10 may perform steps S5 through S7 using a vector obtained by adding the selected acceleration vectors to each other.

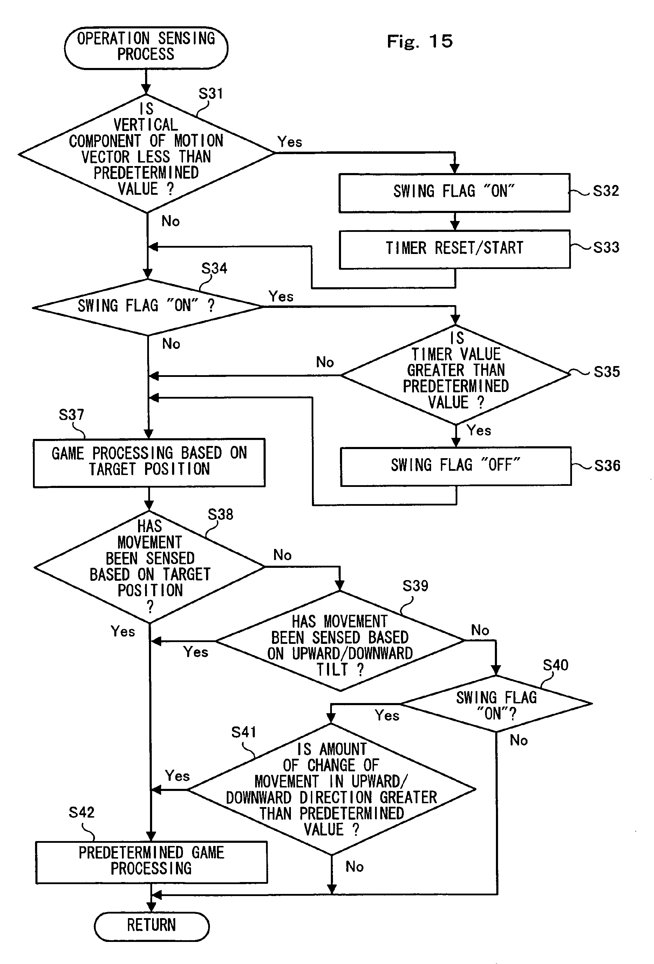

In step S10, the CPU 10 performs an operation sensing process. The operation sensing process is a process for sensing the jump operation (the operation of moving the controller 5 in the upward direction) performed on the controller 5. Here, when the controller 5 has been moved in the upward direction or when the direction in which the controller 5 is pointing has been changed in the upward direction (the controller 5 is directed upward), it is determined that the controller 5 has been moved in the upward direction and that the jump operation has been performed. With reference to FIG. 15, the operation sensing process will be described in detail below.

FIG. 15 is a flow chart showing the flow of the operation sensing process (step S10) shown in FIG. 10. In the operation sensing process, in step S31, the CPU 10 first determines whether or not a vertical direction component (the Y-axis component VY) of the motion vector is smaller than a predetermined value. The predetermined value is a value smaller than that of the above-described G. When the controller 5 starts to move in the upward direction, the acceleration in the upward direction is applied to the controller 5 (i.e., the acceleration sensor senses the acceleration in the downward direction), and consequently, the Y-axis component VY of the motion vector is a value smaller than that of the above-described G. That is, it is possible to determine, by the determination process of step S31, whether or not the controller 5 is being moved in the upward direction. When the determination result of step S31 is affirmative, steps S32 and S33 are performed. On the other hand, when the determination result of step S31 is negative, steps S32 and S33 are skipped and step S34 is performed.

In step S32, the CPU 10 sets the swing flag as "On". In step S33, the CPU 10 resets the value of a timer and starts the count of the timer. By the process of step S33, the time elapsing since the controller 5 has started to move in the upward direction is timed. After step S33, step S34 is performed.

In step S34, the CPU 10 determines whether or not the swing flag is set as "On". Step S34 is a process for determining whether or not the controller 5 is moving in the upward direction. When the determination result of step S34 is affirmative, steps S35 and S36 are performed. On the other hand, when the determination result of step S34 is negative, steps S35 and S36 are skipped and step S37 is performed.

In step S35, the CPU 10 determines whether or not the value of the timer is greater than a predetermined value. The determination is made to determine whether or not a predetermined time has elapsed since the controller 5 has started to move in the upward direction. When the determination result of step S35 is affirmative, step S36 is performed. On the other hand, when the determination result of step S35 is negative, step S36 is skipped and step S37 is performed. In step S36, the CPU 10 sets the swing flag as "Off". Further, the CPU 10 stops the count of the timer at this time. After step S36, step S37 is performed.

In step S37, the CPU 10 executes the game processing based on the marker coordinate data. In the present embodiment, the CPU 10 performs, as the game processing, a process of calculating the pointing position provided on the display screen based on the marker coordinate data and of moving the player character in accordance with the pointing position. Specifically, the position of the player character which is provided in the left/right direction is determined to be the same as the pointing position, with respect to the left/right direction provided on the display screen.

Note that an algorithm for calculating the pointing position may be any algorithm for calculating, based on a captured image, the pointing position provided on the display screen. An example of a method of calculating the pointing position will be described below. Here, the target position calculated based on the marker coordinates is used to calculate the pointing position. The CPU 10 converts the coordinates representing the target position of the xy coordinate system shown in FIG. 13 into the coordinates of a coordinate system (the x'y' coordinate system) for representing the positions provided on the display screen of the TV 2. Here, in the xy coordinate system: the coordinate point at the upper left corner of the captured image is set as its origin; the downward direction is a positive y-axis direction; and the right direction is a positive x-axis direction (see FIG. 13). On the other hand, in the x' y' coordinate system: the coordinate point at the upper left corner of the display screen is set as its origin; the downward direction is a positive y'-axis direction; and the right direction is a positive x'-axis direction. In this case, it is possible to perform the above-described conversion in the following manner. That is, it is possible to obtain an x'-axis component of the pointing position, by inverting the plus and minus of an x-axis component of the coordinates representing the target position and by scaling the x-axis component at a predetermined ratio (e.g., the ratio of scaling the length of the captured image which is obtained in an x-axis direction, to the length of the display screen of the TV 2 which is obtained in an x'-axis direction) . Further, it is possible to obtain a y'-axis component of the pointing position, by scaling a y-axis component of the target position at a predetermined ratio (e.g., the ratio of scaling the length of the captured image which is obtained in a y-axis direction, to the length of the display screen of the TV 2 which is obtained in a y'-axis direction). The position represented by x'y' coordinate values calculated as described above is the pointing position. Further, an example of a more accurate method of calculating the pointing position may be a method of rotating the target position around the center of the captured image such that a vector connecting the two sets of the marker coordinates to each other is parallel to a y-axis, and of performing the above-described conversion process for the rotated target position. A correction process based on a rotation may be performed as described above, whereby it is possible to accurately calculate the pointing position, for example, even when the controller 5 is tilted in the roll direction.

In step S38, based on the target position, the CPU 10 determines whether or not the jump operation has been performed on the controller 5. The determination of step S38 is made using all of the target positions represented by the plurality of pieces of the target position data 66 included in the target position history data 65 stored in the main memory. Based on the target position changing over time, it is possible to easily determine whether or not the controller 5 has been moved in the upward direction (i.e., the controller 5 has been directed upward). For example, as a result of comparing the most recent target position to the second-most recent target position, when the target position has moved more than a predetermined distance (in the positive y-axis direction shown in FIG. 13), it may be determined that the jump operation has been performed. Further, as a result of calculating the amount of movement of the target position during each one frame and the average amount of movement during a predetermined number of frames, when the average amount of movement represents the movement in the upward direction in more than a predetermined distance, it may be determined that the jump operation has been performed. Furthermore, as a result of calculating the amount of movement of the target position during each one frame, when a period of time (frames) during which the target position moves in the downward direction more than a predetermined distance is longer than a predetermined time period, it may be determined that the jump operation has been performed. When the determination result of step S38 is affirmative, step S42 is performed. On the other hand, when the determination result of step S38 is negative, step S39 is performed.

Note that although in the present embodiment, the determination process of step S38 is performed using the history of the target position, the determination process of step S38 may only be performed based on the target position and may be performed using, for example, the history of the pointing position calculated based on the target position. Similarly to the present embodiment, also when the history of the pointing position is used, it is possible to perform the determination process of step S38 by using the method of comparing the most recent pointing position to the second-most recent pointing position, the method of calculating the average amount of movement of the pointing position during each one frame, and the method of determining whether or not a period of time (frames) during which the pointing position moves in the upward direction more than a predetermined distance is longer than a predetermined time period.

Further, in step S38, it is determined, using the target position calculated based on the marker coordinates, that the controller 5 has moved or rotated. Here, the determination of whether or not the controller 5 has moved or rotated may be made based on the movement which is related to the images, included in the captured image, of the markers 6a and 6b. For example, in another embodiment, the contours of the images of the markers 6a and 6b may be extracted using the captured image, and then it may be determined, based on the movements of the extracted contours, whether or not the controller 5 has moved or rotated.

In step S39, based on the upward/downward tilt of the controller 5, the CPU 10 determines whether or not the jump operation has been performed on the controller 5. The determination of step S39 is made using all of the tilts (AngX) represented by the plurality of pieces of the upward/downward tilt data 68 included in the upward/downward tilt history data 67 stored in the main memory. Based on the angle AngX changing over time, it is possible to easily determine whether or not the controller 5 has been directed upward. For example, as a result of comparing the most recent tilt to the second-most-recently calculated tilt, when the tilt has changed upward by more than a predetermined angle, it may be determined that the jump operation has been performed. Further, as a result of calculating the amount of change in tilt during each one frame and the average amount of change during a predetermined number of frames, when the average amount of change represents that the tilt has changed upward by more than a predetermined angle, it may be determined that the jump operation has been performed. Furthermore, as a result of calculating the amount of change in tilt during each one frame, when a period of time (frames) during which the tilt changes in the upward direction by more than a predetermined angle is longer than a predetermined time period, it may be determined that the jump operation has been performed. When the determination result of step S39 is affirmative, step S42 is performed. On the other hand, when the determination result of step S39 is negative, the determination of step S40 is performed.

In step S40, the CPU 10 determines whether or not the swing flag is set as "On". When the determination result of step S40 is affirmative, step S41 is performed. On the other hand, when the determination result of step S40 is negative, the CPU 10 ends the operation sensing process.

In step S41, the CPU 10 determines whether or not the amount of change of the vertical direction component (the Y-axis component VY) of the motion vector is greater than a predetermined value. Here, when performing the operation of moving the controller 5 in the upward direction, the player moves the controller 5 in the upward direction and then stops moving the controller 5. Accordingly, the value of the Y-axis component VY of the motion vector is a negative value when the controller 5 starts to move in the upward direction, and then the value increases from the negative value when the controller 5 stops moving. Consequently, it is possible to determine, by the process of step S41, whether or not the controller 5 has been stopped from moving in the upward direction. When the determination result of step S41 is affirmative, step S42 is performed. On the other hand, when the determination result of step S41 is negative, the CPU 10 ends the operation sensing process.

When the jump operation is performed on the controller 5, the controller 5 first starts to move in the upward direction. The game apparatus 3 senses this movement ("Yes" in step S31), sets the swing flag as "On" (step S32), and starts the count of the timer (step S33). Thereafter, since the determination result of step S40 is affirmative within a predetermined time period from the start of the movement, it is determined, by performing step S41, whether or not the controller 5 has been stopped from moving in the upward direction. As a result, when it is determined that the controller 5 has been stopped from moving ("Yes" in step S41), it is determined that the jump operation has been performed, and then step S42 is performed. On the other hand, when it is not sensed that the controller 5 has been stopped from moving within the predetermined time period from the start of the movement, the determination result of step S35 is negative, and therefore the swing flag is set as "Off" (step S36). In this case, since the determination result of step S40 is negative, neither of steps S41 nor S42 is performed. In the present embodiment, as described above, when the controller 5 has been stopped from moving within the predetermined time period from the start of the movement, it is determined that the jump operation has been properly performed.

Note that in another embodiment, the CPU 10 may make the determination of step S41 based only on the most recent motion vector. For example, the CPU 10 may determine whether or not the value of the Y-axis component VY of the most recent motion vector is greater than a predetermined value. Note that the above-described predetermined value is a value greater than the magnitude G of the gravitational acceleration (a value greater than 0 when the value of (VY-G) is set as the motion data 71). When the determination of step S41 is made based only on the most recent motion vector, only the most recent motion data may be stored in the main memory, and thus step S9 is unnecessary.

In step S42, the CPU 10 executes predetermined game processing in accordance with the jump operation. In the present embodiment, as the predetermined game processing, the CPU 10 causes the player character to perform a jump. After step S42, the CPU 10 ends the operation sensing process.

As described above, based on the operation sensing process of the present embodiment, the jump operation is sensed using the target position obtained from the captured image captured by the imaging means of the controller 5 (step S38) and also the jump operation is sensed using data (the upward/downward tilt data or the motion data) obtained from the output (the acceleration vector) from the acceleration sensor 37 (steps S39 and S41). The change of the target position directly corresponds to the change of the motion of the controller 5. For example, when the controller 5 moves upward, the target position moves downward. When the controller 5 moves downward, the target position moves upward. Therefore, the motion of the controller 5 is sensed based on the change of the target position, whereby it is possible to sense the motion of the controller 5 more accurately than to sense the motion using the output from the acceleration sensor. On the other hand, since the target position is not calculated when the markers 6R and 6L are not detected, it may be impossible to sense the motion of the controller 5 using the target position, depending on the direction of the controller 5. For example, in the present embodiment, when the player performs the operation of moving the controller 5 in the upward direction and the controller 5 is directed too far upward to detect the markers 6R and 6L, it is impossible to sense the motion of the controller 5 using the target position. In response, in the present embodiment, it is possible to certainly sense the motion of the controller 5 using the output from the acceleration sensor 37, even when it is impossible to sense the motion using the target position. Thus, based on the present embodiment, it is possible to accurately sense the jump operation and always possible to sense the motion of the controller 5 by preventing the jump operation from being impossible to be sensed. Note that in another embodiment, only either one of step S39 and step S41 may be performed.

Referring back to FIG. 10, in step S11, the CPU 10 generates and displays the game image. That is, the game image superimposing an image of the pointing icon on an image in which the player character and the obstacles are located in the virtual game space, is generated and displayed on the TV 2 (FIG. 8). In this process, the position and the motion of the player character are determined in accordance with the game operation using the controller 5. That is, the player character is displayed at the position determined by the process of step S37, and an image of the player character performing a jump is displayed when step S42 has been performed.

In step S12, the CPU 10 determines whether or not the game is to be ended. The determination of step S12 is made based on, for example, whether or not the game has been cleared or the game is over, or whether or not the player has given an instruction to cancel the game. When the determination result of step S12 is negative, step S2 is performed again. Thereafter, steps S2 through S12 are repeatedly performed until it is determined in step S12 that the game is to be ended. On the other hand, the determination result of step S12 is affirmative, the CPU 10 ends the game processing shown in FIG. 10. The game processing is as described above.

(Modification)

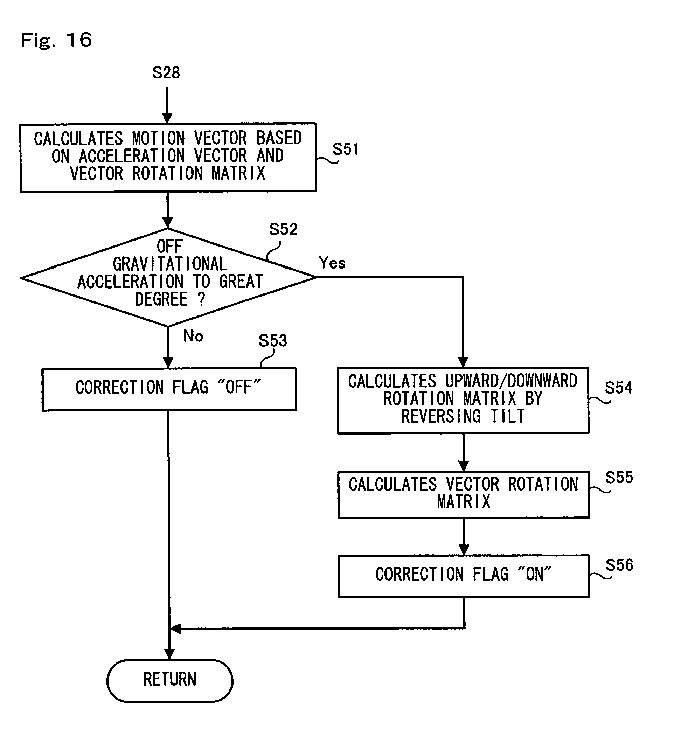

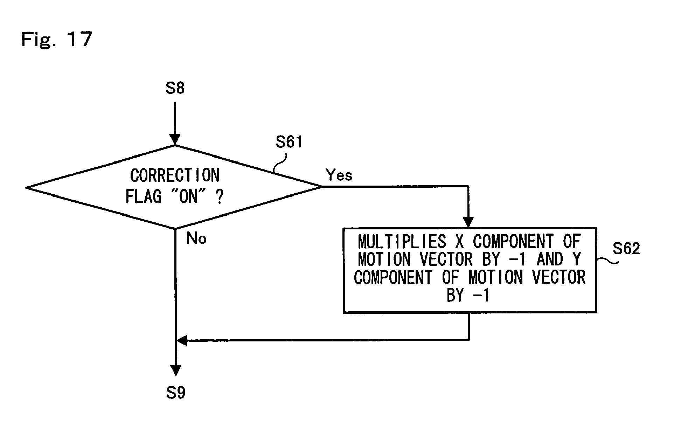

In the present embodiment, the determination of whether the controller 5 is in the reference state or in the reverse state is made by representing the roll-direction tilt AngZ of the controller 5 in the range of $-180 \leq AngZ \leq 180$. In another embodiment, the determination of whether the controller 5 is in the reference state or in the reverse state may be made by a method of the following modification. With reference to FIGS. 16 and 17, the game processing executed by a modification of the present embodiment will be described below. FIG. 16 is a flow chart showing the flow of the rotation matrix calculation process performed by the modification of the present embodiment. In the present modification, in steps S22 and S23 (FIG. 12), the variable AngZ' of equations (2) and (3) is used unchanged as AngZ'. Then, after step S27 (FIG. 12), step S51 is performed. That is, in step S51, the CPU 10 calculates the motion vector V. The process of step S51 is the same as that of step S8.

In step S52, the CPU 10 determines whether or not the motion vector V calculated in step S51 is provided a great degree off a vector representing the gravitational acceleration. Specifically, the difference vector of the motion vector V and the vector ( (0, G, 0) in the present embodiment) representing the gravitational acceleration is calculated, and then it is determined whether or not the magnitude of the difference vector is greater than a predetermined value. Step S52 is a process for determining whether the controller 5 is in the reference state (the state where the negative Y-axis direction is directed in the direction of gravity) or in the reverse state (the state where the positive Y-axis direction is directed in the direction of gravity). When the determination result of step S52 is negative, step S53 is performed. On the other hand, when the determination result of step S52 is affirmative, steps S54 through S56 are performed.

In step S53, the CPU 10 sets a correction flag as "Off". The correction flag is a flag representing whether or not it is required to correct the vector rotation matrix, and is set as "On"/"Off" in accordance with whether the controller 5 is in the reference state or in the reverse state. After step S53, the CPU 10 ends the rotation matrix calculation process.

On the other hand, in step S54, the CPU 10 recalculates the upward/downward rotation matrix Mx by reversing the upward/downward tilt. That is, the upward/downward rotation matrix Mx is calculated by setting the upward/downward tilt as "-AngX". Except for setting the upward/downward tilt as "-AngX", the process of step S54 is the same as that of step S25. In step S55, the CPU 10 calculates the vector rotation matrix M based on the upward/downward rotation matrix Mx calculated in step S54 and the roll rotation matrix Mz calculated in step S26. The method of calculating the vector rotation matrix M is the same as that of step S27. In step S56, the CPU 10 sets the correction flag as "On". After step S56, the CPU 10 ends the rotation matrix calculation process.

Further, FIG. 17 is a flow chart showing a part of the flow of a process performed by the modification of the present embodiment. In the present modification, after step S8, step S61 is performed. That is, in step S61, the CPU 10 determines whether or not the correction flag is set as "On". When the determination result of step S61 is negative, step S9 is performed. On the other hand, when the determination result of step S61 is affirmative, step S62 is performed.

After the X-axis component VX and the Y-axis component VY of the motion vector V are calculated in step S8, the CPU 10 multiplies the calculated X-axis component VX by -1 and the calculated Y-axis component VY by -1, in step S62. The motion vector obtained using the vector rotation matrix calculated in steps S54 through S55 has the X-axis component VX and the Y-axis component VY the signs (+ or -) of which are reversed. Step S62 is a process for reversing the +/- signs of the X-axis component VX and the Y-axis component VY. After step S62, step S9 is performed. In the present modification, step S10 is performed using the motion vector obtained as described above.

As described above, in the present modification, it is determined whether the controller 5 is in the reference state or in the reverse state (step S52). As a result, when the controller 5 is in the reverse state, the upward/downward rotation matrix and the vector rotation matrix are recalculated by reversing the upward/downwardtilt. Consequently, in the present modification, it is possible to accurately calculate the vector rotation matrix and the motion vector, whether the controller 5 is in the reference state or in the reverse stare.

Note that in the present modification, steps S51 through S56 may be performed only when the controller 5 is not being violently moved. The reason is that when the controller 5 is being violently moved, it may be impossible to accurately make the determination in the determination process of step S52. Specifically, steps S51 through S56 may be performed only when the acceleration vector satisfies the above-described first condition and/or second condition.

Note that in the present embodiment, described is an example of the game where the player character is moved by the operation of moving the pointing position and also is caused to perform a jump by the jump operation, but the present invention is not limited thereto. The present invention can be applied to an arbitrary information processing apparatus and an arbitrary information processing program, each of which performs a process of calculating a roll-direction tilt based on a captured image captured by imaging means included in an input device, of calculating an upward/downward tilt based on an acceleration vector detected by acceleration detecting means included in the input device, and of calculating the orientation of the input device based on the roll-direction tilt and the upward/downward tilt.

Note that although in the present embodiment, steps S38, S39, S41, and the like are performed so as to determine whether or not the controller 5 has been moved in the upward direction (moved in the upward direction or rotated), the determination may be made not only for the motion in the upward direction but also for that in the downward direction, that in the front/rear direction, or that in the left/right direction, of the controller 5. Further, in the present embodiment, in the determination process (step S38) performed based on the captured image, the determination is made without distinguishing between whether the controller 5 has been moved in the upward direction and whether the controller 5 has been rotated. However, the movement and the rotation may be distinguished, whereby it may be determined that the controller 5 has been moved or it may be determined that the controller 5 has been rotated. For example, it is possible to determine the rotation around the axis of the capturing direction (the Z-axis direction) of the imaging means, based on the captured image or based on the output from the acceleration sensor or that from the gyro-sensor. Accordingly, the determination of whether or not the controller 5 has rotated around the axis of the capturing direction of the imaging means may be made based on the captured image and also on the output from the acceleration sensor or that from the gyro-sensor. Consequently, it is possible to sense the rotation around the axis of the capturing direction of the imaging means more accurately.

As described above, the present invention is directed to accurately sensing the motion of an input device, and can be applied to, for example, a game apparatus and a game program.

While the invention has been described in detail, the foregoing description is in all aspects illustrative and not restrictive. It is understood that numerous other modifications and variations can be devised without departing from the scope of the invention.

**Claims**

1. A computer-readable storage medium having stored therein an information processing program executed by a computer of an information processing apparatus for performing a process determined in accordance with a motion of an input device,
the input device including imaging means and motion detecting means for detecting the motion of the input device, and
the information processing program causing the computer to execute:

a first determining step (S38) of determining a predetermined motion of the input device based on a motion which is related to images, included in a captured image captured by the imaging means, of predetermined imaging targets and which is obtained in the captured image;
a second determining step (S39, S41) of determining the predetermined motion of the input device based on the detection result of the motion detecting means; and
a first process executing step (S42) of executing a predetermined process in accordance with the determination result of the first determining step and the determination result of the second determining step.

2. The computer-readable storage medium according to claim 1,
wherein, in the second determining step, the computer determines a motion of the same type as the predetermined motion determined in the first determining step, and
wherein, in the first process executing step, the computer executes the predetermined process when it is determined, in at least either one of the first determining step and the second determiningstep,that the predetermined motion hasbeen performed.

3. The computer-readable storage medium according to claim 2,
wherein the motion detecting means is an acceleration sensor,
wherein, in the first determining step, the computer determines, based on the motion which is related to the images, included in the captured image, of the imaging targets and which is obtained in the captured image, whether or not the input device has moved or rotated in a predetermined direction,
wherein, in the second determining step, the computer determines, based on the motion of the input device which is calculated based on the detection result of the acceleration sensor, whether or not the input device has moved in the predetermined direction, and
wherein, in the first process executing step, the computer executes the predetermined process when it is determined, in at least either one of the first determining step and the second determining step, that the motion of the input device has been performed.

4. The computer-readable storage medium according to claim 3,
wherein the information processing program further causes the computer to execute a third determining step (S39) of, based on a tilt of the input device which is calculated based on the detection result of the acceleration sensor and which is related to a rotation around an axis of a horizontal direction, determining the rotation of the input device around the axis of the horizontal direction,

wherein, in the first determining step, the computer determines whether or not the input device has moved or rotated in a vertical direction,

wherein, in the second determining step, the computer determines whether or not the input device has moved in the vertical direction, and

wherein, in the first process executing step, the computer executes the predetermined process when it is determined, in at least one of the first determining step, the second determining step, and the third determining step, that the motion of the input device has been performed.

5. The computer-readable storage medium according to claim 4,
wherein the information processing program further causes the computer to execute:

a first tilt calculating step (S22) of, based on a tilt which is related to the images, included in the captured image captured by the imaging means, of the imaging targets and which is obtained in the captured image, calculating, as a first tilt, a tilt of the input device which is related to a rotation around an axis of a capturing direction of the imaging means;

a second tilt calculating step (S5) of, based on the detection result of the acceleration sensor, calculating, as a second tilt, the tilt of the input device which is related to the rotation around the axis of the horizontal direction; and

an orientation calculating step (S27) of calculating an orientation of the input device based on the first tilt and the second tilt,

wherein, in the third determining step, the computer determines the rotation of the input device based on the second tilt, and

wherein, in the second determining step, the computer makes the determination, using a motion of the input device which is obtained by correcting, based on the orientation calculated in the orientation calculating step, accelerations in three-axial directions which are detected by the acceleration sensor.

6. The computer-readable storage medium according to claim 5,
wherein the acceleration sensor is capable of outputting an output value which varies in accordance with the rotation around the axis of the capturing direction of the imaging means, and
wherein the information processing program further causes the computer to execute:

a determining step (S21) of, based on a state of the imaging targets being captured by the imaging means, determining whether or not it is possible to calculate the first tilt in the first tilt calculating step; and

a third tilt calculating step (S23, S24) of calculating the first tilt based on the output value from the acceleration sensor when it is determined in the determining step that it is impossible to calculate the first tilt.

7. The computer-readable storage medium according to claim 2,
wherein the motion detecting means is an acceleration sensor,
wherein, in the first determining step, the computer determines, based on the motion which is related to the images, included in the captured image, of the imaging targets and which is obtained in the captured image, whether or not the input device has moved or rotated in the vertical direction,
wherein, in the second determining step, the computer determines a rotation of the input device around an axis of the vertical direction based on a tilt of the input device which is calculated based on the detection result of the acceleration sensor and which is related to a rotation around an axis of a horizontal direction, and
wherein, in the first process executing step, the computer executes the predetermined process when it is determined, in at least either one of the first determining step and the second determining step, that the motion of the input device has been performed.

8. The computer-readable storage medium according to claim 2,
wherein, in the first determining step, the computer determines whether or not the input device has rotated around an axis of a capturing direction of the imaging means,
wherein, in the second determining step, the computer determines, based on the detection result of the sensor, whether or not the input device has rotated around the axis of the capturing direction, and
wherein, in the first process executing step, the computer executes the predetermined process when it is determined, in at least either one of the first determining step and the second determining step, that the input device has rotated.

**9.** The computer-readable storage medium according to claim 1,
wherein, in the first determining step, the computer determines the predetermined motion of the input device based on a position which is related to the images, included in the captured image captured by the imaging means, of the predetermined imaging targets and which is provided in the captured image, and
wherein the information processing program further causes the computer to execute a second process executing step of executing a process different from the predetermined process based on the position which is related to the images, included in the captured image captured by the imaging means, of the imaging targets and which is provided in the captured image.

**10.** A computer-readable storage medium having stored therein an information processing program executed by a computer of an information processing apparatus for performing a process determined in accordance with a tilt of an input device,
the input device including imaging means and motion detecting means for detecting a motion of the input device, and
the information processing program causing the computer to execute:

a first determining step (S22) of determining a predetermined tilt of the input device based on a tilt which is related to images, included in a captured image captured by the imaging means, of predetermined imaging targets and which is obtained in the captured image;
a second determining step (S5) of determining the predetermined tilt of the input device based on the detection result of the motion detecting means; and
a process executing step (S27) of executing a predetermined process in accordance with the determination result of the first determining step and the determination result of the second determining step.

**11.** The computer-readable storage medium according to claim 10,
wherein the motion detecting means is a sensor for outputting an output value which varies in accordance with a rotation around an axis of a predetermined direction different from a capturing direction of the imaging means of the input device,
wherein, in the first determining step, the computer determines, based on the tilt which is related to the images, included in the captured image captured by the imaging means, of the imaging targets and which is obtained in the captured image, a tilt of the input device which is related to a rotation around an axis of the capturing direction,
wherein, in the second determining step, the computer determines, based on the output value from the sensor, a tilt of the input device which is related to the rotation around the axis of the predetermined direction, and
wherein, in the process executing step, the computer calculates an orientation of the input device based on the first tilt and the second tilt.

**12.** The computer-readable storage medium according to claim 11,
wherein the sensor is an acceleration sensor capable of detecting accelerations in three-axial directions separately, and
wherein, in the process executing step, the computer further calculates the motion of the input device by correcting, based on the calculated orientation, the accelerations in the three-axial directions which are detected by the acceleration sensor.

**13.** An information processing apparatus for performing a process determined in accordance with a motion of an input device,
the input device including imaging means and motion detecting means for detecting the motion of the input device, and
the information processing apparatus comprising:

first determining means for determining a predetermined motion of the input device based on a motion which is related to images, included in a captured image captured by the imaging means, of predetermined imaging targets and which is obtained in the captured image;
second determining means for determining the predetermined motion of the input device based on the detection result of the motion detecting means; and
process executing means for executing a predetermined process in accordance with the determination result of the first determining means and the determination result of the second determining means.

**14.** An information processing apparatus for performing a process determined in accordance with a tilt of an input device,
the input device including imaging means and motion detecting means for detecting a motion of the input device, and
the information processing apparatus comprising:

first determining means for determining a predetermined tilt of the input device based on a tilt which is related to images, included in a captured image captured by the imaging means, of predetermined imaging targets and which is obtained in the captured image;

second determining means for determining the predetermined tilt of the input device based on the detection result of the motion detecting means; and

process executing means for executing a predetermined process in accordance with the determination result of the first determining means and the determination result of the second determining means.

Fig. 1

Fig. 2

Fig. 3

5

32h    35

32a

32d

32e

32b

32c

32f

31

31a

32g

34d

34c

34b

33    34a

Y

Z

X

Fig. 4

5

32i

X

Z

Y

35a

Fig. 5A

Fig. 5B

Fig. 6

Fig. 7

Fig. 8

Fig. 9

| GAME PROGRAM | ～60 |
|---|---|

| OPERATION DATA | ～61 |
|---|---|

| ACCELERATION DATA (AX, AY, AZ) | ～62 |
|---|---|
| MARKER COORDINATE DATA<br>((mx1, my1) (mx2, my2)) | ～63 |

:

| GAME PROCESSING DATA | ～64 |
|---|---|

| TARGET POSITION HISTORY DATA | ～65 |
|---|---|

| TARGET POSITION DATA | ～66 |
|---|---|

:

| UPWARD/DOWNWARD TILT HISTORY DATA | ～67 |
|---|---|

| UPWARD/DOWNWARD TILT DATA (AngX) | ～68 |
|---|---|

:

| ROLL TILT DATA (AngZ) | ～69 |
|---|---|

| MOTION HISTORY DATA | ～70 |
|---|---|

| MOTION DATA (VY) | ～71 |
|---|---|

:

| UPWARD/DOWNWARD ROTATION MATRIX DATA<br>(Mx) | ～72 |
|---|---|
| ROLL ROTATION MATRIX DATA (Mz) | ～73 |
| VECTOR ROTATION MATRIX DATA (M) | ～74 |

:

EP 1 961 466 A1

Fig. 10

```
        ┌──────────┐
        │  START   │
        └────┬─────┘
             ▼
   ┌────────────────────────┐
   │    INITIALIZATION      │ ～ S1
   └────────────┬───────────┘
                │
   ┌────────────▼───────────┐
   │  OBTAINS OPERATION DATA │ ～ S2
   └────────────┬───────────┘
                ▼
   ┌────────────────────────┐
   │ CALCULATES TARGET POSITION │ ～ S3
   └────────────┬───────────┘
                ▼
   ┌────────────────────────┐
   │  UPDATES HISTORY OF TARGET │ ～ S4
   │        POSITION        │
   └────────────┬───────────┘
                ▼
   ┌────────────────────────┐
   │ CALCULATES UPWARD/DOWNWARD TILT │ ～ S5
   │ BASED ON ACCELERATION VECTOR │
   └────────────┬───────────┘
                ▼
   ┌────────────────────────┐
   │  UPDATES HISTORY OF UPWARD/ │ ～ S6
   │     DOWNWARD TILT      │
   └────────────┬───────────┘
                ▼
   ┌────────────────────────┐
   │ ROTATION MATRIX CALCULATION │ ～ S7
   │        PROCESS         │
   └────────────┬───────────┘
                ▼
   ┌────────────────────────┐
   │ CALCULATES MOTION VECTOR BASED │ ～ S8
   │ ON ACCELERATION VECTOR AND │
   │  VECTOR ROTATION MATRIX │
   └────────────┬───────────┘
                ▼
   ┌────────────────────────┐
   │  UPDATES HISTORY OF MOTION OF │ ～ S9
   │      CONTROLLER        │
   └────────────┬───────────┘
                ▼
   ┌────────────────────────┐
   │ OPERATION SENSING PROCESS │ ～ S10
   └────────────┬───────────┘
                ▼
   ┌────────────────────────┐
   │ GENERATES AND DISPLAYS GAME │ ～ S11
   │        IMAGE           │
   └────────────┬───────────┘
                ▼
         ◇ IS GAME TO
      No    BE ENDED ?  ◇ ～ S12
                │ Yes
                ▼
        ┌──────────┐
        │   END    │
        └──────────┘
```

Fig. 11

EP 1 961 466 A1

Fig. 12

ROTATION MATRIX
CALCULATION PROCESS

S21
HAVE MARKER
COORDINATES BEEN
DETECTED ?

No

Yes    S22

CALCULATES ROLL-DIRECTION
TILT BASED ON MARKER
COORDINATES

CALCULATES ROLL-DIRECTION
TILT BASED ON ACCELERATION
VECTOR    S23

CORRECTS ROLL-DIRECTION
TILT    S24

CALCULATES UPWARD/DOWNWARD
ROTATION MATRIX BASED ON
UPWARD/DOWNWARD    S25

CALCULATES ROLL ROTATION
MATRIX BASED ON ROLL-
DIRECTION TILT    S26

CALCULATES VECTOR ROTATION
MATRIX    S27

RETURN

Fig. 13

Fig. 14

Fig. 15

```
        ┌─────────────────────┐
        │ OPERATION SENSING   │
        │     PROCESS         │
        └─────────────────────┘
                  │
                  ▼           S31
            ╱─────────────╲
           ╱      IS       ╲
          ╱   VERTICAL      ╲
         ╱ COMPONENT OF MOTION╲  Yes    ┌──────────────────────┐
        ⟨ VECTOR LESS THAN    ⟩────────▶│   SWING FLAG "ON"    │─S32
         ╲ PREDETERMINED     ╱          └──────────────────────┘
          ╲   VALUE ?       ╱                      │
           ╲─────────────╱                         ▼
                  │ No                   ┌──────────────────────┐
                  │         ┌────────────│  TIMER RESET/START   │─S33
                  ▼         │            └──────────────────────┘
            ╱─────────────╲ │
           ╱    S34        ╲│ Yes                 ┌─────────────╲
          ⟨ SWING FLAG "ON" ? ⟩──────────────────▶╱     IS       ╲
           ╲─────────────╱                       ╱  TIMER VALUE   ╲
                  │ No                    No     ╱  GREATER THAN    ╲  S35
                  │         ◀────────────────────⟨  PREDETERMINED   ⟩
                  │         ◀───────┐             ╲    VALUE ?     ╱
   S37            ▼                 │              ╲─────────────╱
   ┌──────────────────────────┐     │                    │ Yes
   │ GAME PROCESSING BASED ON │     │             ┌──────────────────────┐
   │ TARGET POSITION          │     └─────────────│   SWING FLAG "OFF"   │─S36
   └──────────────────────────┘                   └──────────────────────┘
                  │
                  ▼        S38
            ╱─────────────╲
           ╱    HAS         ╲
          ╱   MOVEMENT       ╲  No
         ⟨ BEEN SENSED        ⟩────────┐
          ╲ BASED ON TARGET  ╱         ▼          S39
           ╲  POSITION      ╱    ╱─────────────╲
            ╲     ?        ╱    ╱ HAS MOVEMENT   ╲  No
             ╲──────────╱   Yes╱ BEEN SENSED BASED╲────────┐
                  │ Yes    ◀───⟨ ON UPWARD/DOWNWARD ⟩       ▼        S40
                  │            ╲    TILT ?       ╱    ╱─────────────╲
                  │             ╲─────────────╱     ╱  SWING FLAG    ╲ No
                  │                           Yes  ⟨    "ON"?        ⟩──┐
                  │         S41              ┌──────╲─────────────╱    │
                  │    ╱─────────────╲       │                          │
                  │   ╱     IS         ╲     ▼                          │
                  │  ╱ AMOUNT OF CHANGE ╲                               │
                  │ ⟨ OF MOVEMENT IN     ⟩ Yes                          │
                  │  ╲ UPWARD/DOWNWARD   ╱───┐                          │
                  │   ╲DIRECTION GREATER╱    │                          │
    S42           │    ╲THAN PREDETER- ╱     │                          │
    ┌─────────────┴─┐   ╲MINED VALUE ?╱      │                          │
    │ PREDETERMINED │    ╲──────────╱        │                          │
    │ GAME          │◀────────┘│ No          │                          │
    │ PROCESSING    │          ▼             │                          │
    └───────────────┘          ▼◀───────────┘◀─────────────────────────┘
            │                   │
            ▼                   ▼
        ┌─────────────────────┐
        │      RETURN         │
        └─────────────────────┘
```

Fig. 16

S28
↓

CALCULATES MOTION VECTOR BASED
ON ACCELERATION VECTOR AND
VECTOR ROTATION MATRIX ⟩S51

↓

OFF
GRAVITATIONAL
ACCELERATION TO GREAT
DEGREE ? ⟩S52

Yes →

No ↓ S53

CORRECTION FLAG "OFF" ⟩S53

CALCULATES UPWARD/DOWNWARD
ROTATION MATRIX BY
REVERSING TILT ⟩S54

↓

CALCULATES VECTOR ROTATION
MATRIX ⟩S55

↓

CORRECTION FLAG "ON" ⟩S56

RETURN

43

Fig. 17

S8

CORRECTION
FLAG "ON" ?   S61

Yes

No

MULTIPLIES X COMPONENT OF
MOTION VECTOR BY -1 AND Y
COMPONENT OF MOTION VECTOR
BY -1   S62

S9

**European Patent Office**

## EUROPEAN SEARCH REPORT

Application Number

EP 08 00 2545

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 009 501 A (FENNER DAVID F [GB] ET AL) 23 April 1991 (1991-04-23)<br>* abstract *<br>* column 3, line 41 - line 54 *<br>* column 5, line 38 - line 53 *<br>* column 10, line 26 - line 35 *<br>* figures 1-13 * | 1-14 | INV.<br>A63F13/02<br>A63F13/04<br>A63F13/06 |
| Y | US 2006/178212 A1 (PENZIAS ARNO [US]) 10 August 2006 (2006-08-10)<br>* abstract *<br>* paragraph [0027] *<br>* paragraph [0075] - paragraph [0078] *<br>* figures 4,9a-9d,10 * | 1-14 | |
| X | WO 01/86920 A (LAPIDOT ZVI [IL]) 15 November 2001 (2001-11-15)<br>* abstract *<br>* page 5, line 15 - line 31 * | 1-14 | |
| X | WO 2004/066615 A (NOKIA CORP [FI]; SYRBE HANNO [DE]; KRISCHEU KLAUS [DE]; KOIVUNEN RAMI) 5 August 2004 (2004-08-05)<br>* abstract *<br>* page 8, line 16 - line 33 *<br>* page 15, line 23 - line 33 *<br>* page 22, line 13 - line 29 *<br>* figures 3-3.13 * | 1-14 | TECHNICAL FIELDS SEARCHED (IPC)<br><br>A63F |
| A | WO 2004/012130 A (ANDAMIRO CO LTD [KR]; KIM YONG-HWAN [KR]; JUNG WOO-JIN [KR]) 5 February 2004 (2004-02-05)<br>* abstract *<br>* page 5, line 16 - page 9, line 15 *<br>* figures 1-4 * | 1-14 | |

The present search report has been drawn up for all claims

| Place of search | Date of completion of the search | Examiner |
|---|---|---|
| Munich | 22 April 2008 | Garton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 00 2545

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2008

| Patent document cited in search report | | Publication date | Patent family member(s) | | Publication date |
|---|---|---|---|---|---|
| US 5009501 | A | 23-04-1991 | AU | 8237987 A | 16-06-1988 |
| | | | DE | 3751226 D1 | 11-05-1995 |
| | | | DE | 3751226 T2 | 07-12-1995 |
| | | | EP | 0344153 A1 | 06-12-1989 |
| | | | ES | 2005952 A6 | 01-04-1989 |
| | | | WO | 8804060 A2 | 02-06-1988 |
| US 2006178212 | A1 | 10-08-2006 | NONE | | |
| WO 0186920 | A | 15-11-2001 | AU | 5657601 A | 20-11-2001 |
| WO 2004066615 | A | 05-08-2004 | AU | 2003303787 A1 | 13-08-2004 |
| | | | EP | 1588552 A1 | 26-10-2005 |
| | | | US | 2006146009 A1 | 06-07-2006 |
| WO 2004012130 | A | 05-02-2004 | AU | 2003225391 A1 | 16-02-2004 |
| | | | JP | 2005533628 T | 10-11-2005 |
| | | | TW | 222380 B | 21-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007044100 A

- JP 2003333361 A